# EUROPEAN PATENT APPLICATION

(11) **EP 1 205 844 A2**
(43) Date of publication of application: **15.05.2002**
(21) Application number: 01309528.6
(22) Date of filing: 12.11.2001
(51) Int. Cl.: G06F 9/44

(54) **Filter based authoring tool**

(30) Priority: 13.11.2000 GB 0027685
(71) Applicant: CANON KABUSHIKI KAISHA, Tokyo (JP)
(72) Inventor: McLean, Alistair W.,Dr., c/o Canon Res. Centre Eur, Bracknell, Berkshire RG12 2XH (GB); Portman, Martin R., Dr., c/o Canon Res. Centre Eur, Bracknell, Berkshire RG12 2XH (GB)
(74) Representative: Beresford, Keith Denis Lewis

(57) **Abstract**

A desktop personal computer 410 is provided with a system for building custom applications. A set of filters 3 is assembled by the user in an operating environment 4 by selection from a library 5 of available filters, each filter performing a respective processing task on data objects which may be input from a data memory 6. An output of the system is processed by a user interface controller 10 for display on a display screen 20 in which data is displayed in a data display area 21, the sequence of filters being represented graphically by a stack of filter boxes 24 in a filter display window 23, and the selection of filters from the library 5 being facilitated by a filter selector window 25. Each of the filters is controllable by the user interface provided within a respective filter box 24, data and user interface description objects being communicated by respective channels 811 and 88 connecting the filters in sequence. Some filters have the facility to amend the user interface component of other preceding filters in the sequence. A help filter may be included in the sequence to generate a help object which, when displayed, provides help information to the user. A further control channel 321 enables some filters to be bidirectional whereby edit commands may be communicated in a reverse direction to the order of the filter sequence in order to enable data stored internally within one of the filters or externally in a file system 348 to be edited. The system enables a user to construct customised programming applications from reusable processing elements in order to perform a wide variety of tasks commonly performed by personal computers.

## Description

This invention relates to data processing using a programmable computer in which a customised application is used to process the data and the application is assembled from a user selection of processing modules, referred to herein as filters.

Aspects of the present invention also relate to the creation of a visual programming environment in which the selection and assembly of filters to form an application is represented graphically using a graphical user interface such that changes to the assembly of filters are represented visually as corresponding changes in the displayed representations of the filters.

Aspects of the present invention also relate to the manner in which data objects are visualised using a graphical user interface.

It is known from US-A-5841437 to provide a graphical user interface in which data objects are displayed in a starfield display pattern and in which "viewing operation regions" on a display screen can be manipulated such that associated filters apply dynamic queries to data in a database represented by the starfield display.

It is also known from US-A-5913038 to provide processing of multimedia data using a number of filters which are combined within the architecture of a filter graph. The filters within the filter graph can be connected such that the output of one filter typically becomes the input for the next filter such that a stream of multimedia data can be read, split apart, decoded and rendered by different filter components.

It is also known from GB-A-2247597 to process image data with a series of successive processing operations represented graphically by a series of icons to enable a user to assemble a complex processing application from component processing elements.

The present invention seeks to provide an improved method and processing system for processing data.

Accordingly there is disclosed a system in which data objects are processed by a plurality of processing elements, referred to herein as filters, which are selected from a library of available filters and loaded into an operating environment such that a data path connects the filters. At least one of the filters has an output for presenting information to the user, typically in the form of an output to a display device which also presents a visual representation of the operational relationship between the selected filters and provides an interactive environment for configuring each filter.

Embodiments of the present invention will now be described by way of example only and with reference to the accompanying drawings of which;
Figure 1 is a schematic diagram showing the basic architecture of the system;
Figure 2 illustrates a display screen of the graphical user interface of the system of Figure 1;
Figure 3 illustrates connection of the system via the Internet for searching a database;
Figure 4 is a schematic diagram of a filter selector window of the display screen of Figure 2;
Figure 5 is a schematic view of the graphical user interface used in the example of patents document retrieval from the database of Figure 3;
Figure 6 is a schematic representation of an application formed from an assembly of filters used in the example of Figures 3 to 5;
Figure 7A is a representation of a grep filter box showing a menu of attributes which can be searched;
Figure 7B is a corresponding representation of the grep filter box of Figure 7A after selecting a particular attribute for the search;
Figure 8 illustrates an example of a selection of filters for processing a collection of data elements;
Figure 9 is a schematic representation of a filter sequence;
Figure 10 is a representation of a filter display window corresponding to the filter sequence of Figure 9;
Figure 11 is a representation of a further filter sequence;
Figure 12 is a representation of a filter display window corresponding to the filter sequence of Figure 11;
Figure 13 is a further example of a filter sequence and which includes a tool bar filter;
Figure 14 is a representation of the filter display window corresponding to the filter sequence of Figure 13;
Figure 15 is a representation of the filter display window corresponding to the filter sequence of Figure 13 after constraining the tool bar filter box to be invisible;
Figure 16 is a representation of a further filter sequence including an "add data controls" filter;
Figure 17 is a representation of a filter display window and part of the data display window corresponding to the filter sequence of Figure 16;
Figure 18 is a schematic representation of an application being downloaded to a portable computer device;
Figure 19 is a representation of a filter sequence for a printer control application;
Figure 20 illustrates the graphical user interface used to develop an application for a printer user interface;
Figure 21 illustrates a printer user interface for a black and white printer;
Figure 22 is an illustration of a user interface for a colour printer;
Figure 23 is an illustration of a user interface for a facsimile machine;
Figure 24 is a representation of a filter sequence including a help filter;
Figure 25 is an illustration of the filter display window corresponding to the filter sequence of Figure 24;
Figure 26 is an illustration of the data display when the help button is selected;
Figure 27 is an illustration of a help document;
Figure 28 is an illustration of the data display when the ALL button is selected;
Figure 29 is a representation of a filter sequence including an adaptive help filter;
Figure 30 is a representation of a filter sequence including a trace filter;
Figure 31 illustrates the data display corresponding to the output of the trace filter of Figure 30;
Figure 32 is a schematic representation of a bi-directional filter;
Figure 33 is a schematic representation of the sub-filter structure of the filter of Figure 32;
Figure 34 is a representation of a filter sequence including bi-directional filters;
Figure 35 illustrates the graphical user interface for a word processing application;
Figure 36 is a representation of a filter sequence for an application to edit diagrams;
Figure 37 illustrates a graphical user interface for the diagram editing application of Figure 36;
Figure 38A illustrates the display area for a diagram editing operation at the point of object selection;
Figure 38B illustrates the display area of Figure 38A after selection, showing selection handles;
Figure 38C illustrates the display area of Figure 38A and 38B after movement of the selected object;
Figure 39 is a representation of a filter sequence for a diagram editing application having an undo filter;
Figure 40 illustrates the graphical user interface for the diagram editing application of Figure 39; and

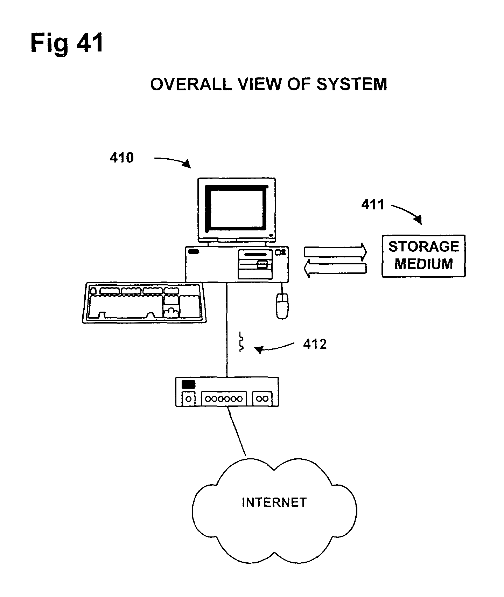

Figure 41 is an illustration of computer apparatus.

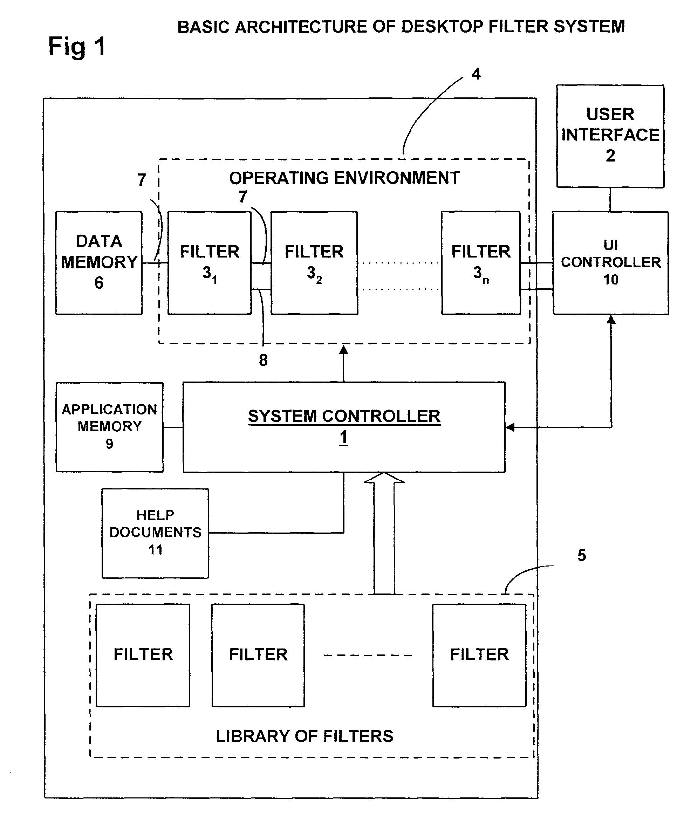

Figure 1 illustrates a system implemented on a desk top personal computer. A system controller 1 is responsive to user commands received via a user interface 2 to load a user selection of filters 3 into an operating environment 4 in which the filters are arranged in a user determined sequence.

The selected filters 3 are selected from a library 5 of available filters accessible to the system controller 1.

A data memory 6 containing data to be processed by the sequence of selected filters is coupled to the first filter 3₁ of the sequence, represented in Figure 1 by a data channel 7 which connects the data memory 6 to the first filter 3, and to successive filters 3₂ to 3ₙ in the sequence. The total number n of filters loaded into the operating environment 4 is variable and determined by the user selection. Also shown is a display control channel 8 for communicating display control data to the graphical user interface 2 from each of the filters via a user interface controller 10.

The selected sequence of filters 3ᵢ, i = 1 to n within the operating environment together form an application. Information defining the selection of a particular sequence may be saved for later use in an application memory 9 so that it will not always be necessary for the user to assemble selected filters if information defining the required assembly has previously been saved.

The system controller 1 also has access to a library of help documents 11 described later.

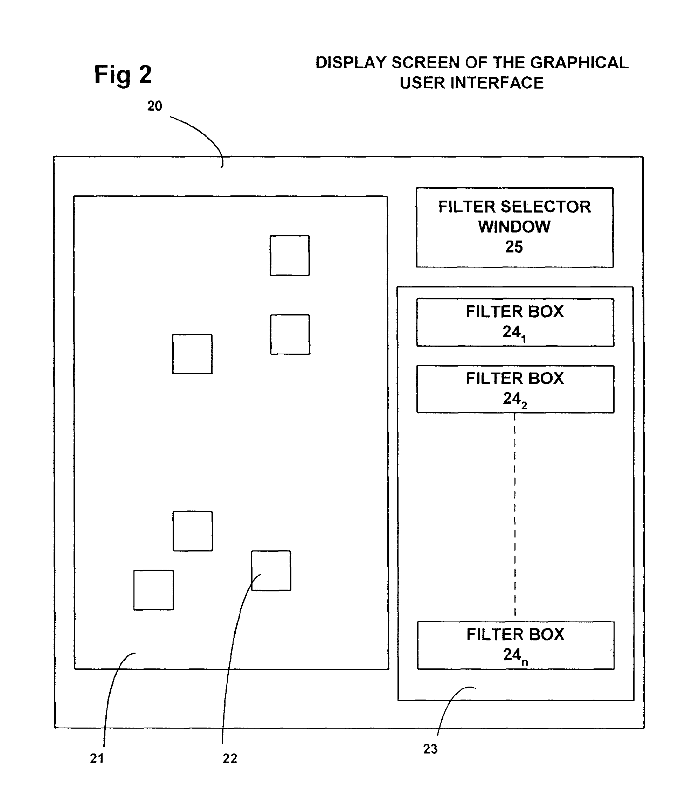

The user interface 2 in the following example is a graphical user interface. Figure 2 illustrates schematically a typical display screen 20 presented to the user by the graphical user interface 2. The display screen 20 includes a data display area 21 within which, in an example of using the system to display a collection of data objects which are the results of a database search, individual data objects are represented by respective data icons 22. In the example of Figure 2, the data objects are represented in scatterplot form in which position information associated with each individual data object is randomly generated such that the data icons 22 are randomly distributed over the data display area 21.

The display screen 20 also includes a filter display window 23 within which each of the selected filters 3₁ to 3ₙ currently loaded into the operating environment 4 is represented by a respective filter box 24ᵢ, i = 1 to n.

Each of the filter boxes is created in the display screen as a window within which graphics and text are displayed such that, for a given window, the filter box provides an indication of the identity of the corresponding filter to which it relates, control parameters for controlling the filter, and any data input by the user via the interface for controlling operation of the filter or filter sequence.

The sequence of operational connectivity between the selected filters 3ᵢ, is preserved in the display of the filter display window 23 such that the flow of data from data memory 6 is visually identifiable as a downward direction of flow through the stack of filter boxes 24 within the filter display window 23.

A user may add an additional filter to the sequence with the aid of an interactive display provided within a filter selector window 25 for enabling a user to select further filters from the library 5 of available filters, each new filter being added to a position in the sequence and represented by a new filter box 24ₙ at a corresponding position in the stack. Additional facilities for removing filters from the stack or changing the order of filters are also provided but are not illustrated in Figure 2.

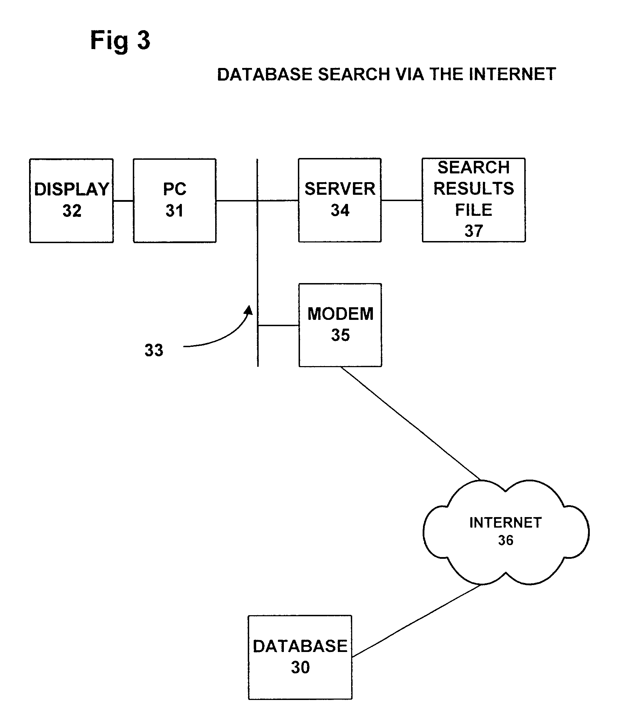

In the present example, a system is described in which a sequence of filters 3ᵢ is used to manage and extract selective information from the results of a search for patent documents in a patent database 30 as illustrated in Figure 3. In this example, the system illustrated in Figure 1 is operated by a personal computer 31 having a display 32 and connected via a local network 33 to a server 34. A modem 35 connects the local network 33 via the Internet 36 to the database 30.

A search conducted for patent documents in the database 30 results in the accumulation of data in a search results file 37 in the server 34 which is accessible to the computer 31 for display to the user.

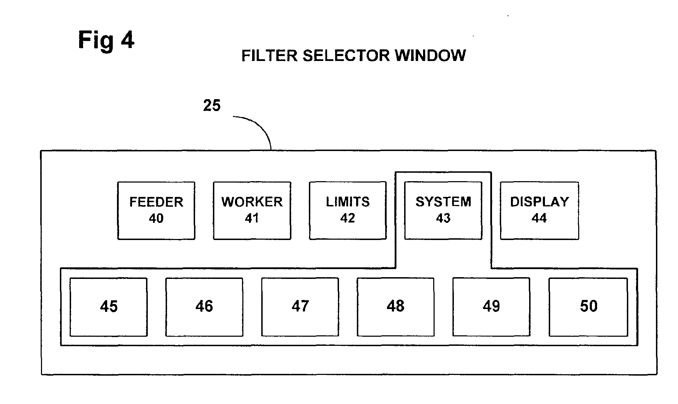

The user, in order to view the search results, constructs an application for processing the data by selecting filters 3 from the library 5 of available filters using the graphical user interface 2 which includes display 32, and in particular utilising the selection facilities provided within the filter selector window 25 as illustrated in greater detail in Figure 4.

The filter selector window 25 displays a series of tabs 40 to 44, each associated with a respective class of filters. Selecting any one of the tabs 40 to 44 using a display cursor and mouse of the computer 31 results in the display of a menu of filters within the selected class, as illustrated in Figure 4 by the display of filter icons 45 to 50 in response to selection of tab 43. Selection of any one of the filter icons 45 to 50 results in the addition of a selected filter to the sequence of filters in the operating environment 4 and the addition of a corresponding filter box 24 to the stack of filter boxes displayed in the filter display window 23.

In the present example, the classes of filters associated with the tabs 40 to 44 are as follows;
tab 40 is for feeder filters responsible for importing data objects to the sequence of filters;
tab 41 is for worker filters responsible for modifying the data objects;
tab 42 is for limit filters which provide filtering function in the true sense of the term "filter" to pass on only selected data objects to successive filters in the sequence;
tab 43 selects system filters; and
tab 44 selects display filters which have display outputs resulting in information being displayed in the data display area 21.

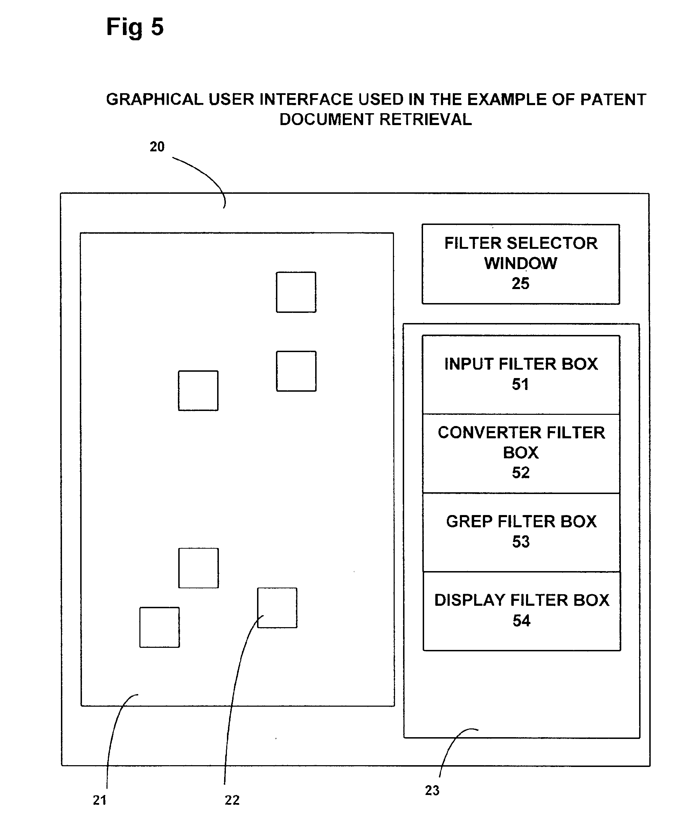

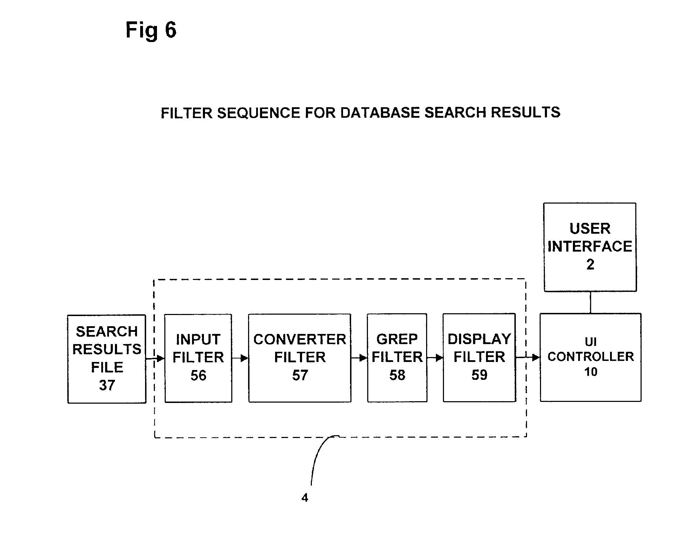

Figure 5 illustrates an example of the graphical user interface 2 corresponding to a user selection of filters for the present example as represented by filter boxes 51 to 54. Figure 6 illustrates the corresponding sequence of filters 56 to 59 loaded into the operating environment 4 as a result of this specific user selection. Input filter 56 responds to the input of a URL (Uniform Resource Locator) input by the user via a keyboard of the computer 31 to retrieve the contents of the search results file 37 via the local network 33.

A data stream from data memory 6 is initiated by a command from the system controller 1 and inputs a series of data elements to the input filter 56, each element containing information relating to a specific patent item retrieved from the database 30 in the format dictated by the search engine responsible for the search.

Filter box 52 as shown in Figure 5 provides a graphical interface for a converter filter 57 as shown in Figure 6 which is the next filter in sequence following the input filter 56 and which receives a stream of data elements output from the input filter. The converter filter 57 takes each of the data elements and converts them into a respective Java object in a format which is appropriate for processing by subsequent filters in the sequence.

The grep filter box 53 shown in Figure 5 provides a graphical interface for grep filter 58 as shown in Figure 6 which is the next filter in the sequence and which receives data objects output from the converter filter 57. The grep filter 58 is one of the "limits filters" available for selection by the user after selecting the tab 42 of Figure 4. The function of the grep filter 58 is to pass only data objects conforming to search criteria defined by the user via the interface provided in the grep filter box 53. The grep filter 58 is designed to look for text strings defined by the user. As an example in the context of the patent document search, the user may request only data objects in respect of which the patent assignee has a given name input by the user. The grep filter 58 responds by passing only those data objects meeting this criteria and preventing remaining objects from being passed on to the next filter in the sequence.

The grep filter 58 cannot however know in advance the available attributes of the data object from which a user may choose to make a selection and therefore the grep filter is configured to construct the appearance of its user interface, i.e. the grep filter box 53, only when a first data object has been received and the list of available attributes extracted from the data object. This facility is required since the user may have selected any one of a number of available converter filters 57 which may have different formats for the data objects which they produce.

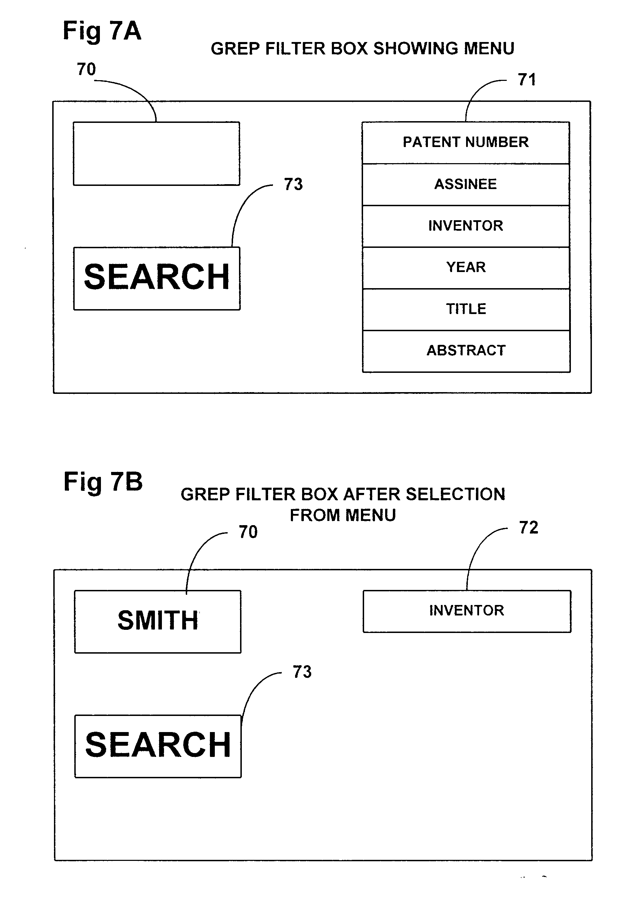

Figures 7A and 7B illustrate the typical appearance of the grep filter box 53 and includes a search target box 70 in which a user may enter a text string identifying a search target. Figure 7A illustrates a menu 71 of attributes which can be searched and Figure 7B shows the result of selecting a particular attribute as "inventor", the selected attribute then occupying the selected attribute box 72.

After selection of the selected attribute, the user enters an inventor name such as "Smith" in the search target box 70 and selects the SEARCH button 73 so that the grep filter 58 will process the stream of data objects and output only those data objects having "Smith" as inventor.

As an alternative, the user may enter a regular expression pattern such as S*th*, in response to which the grep filter would search for text matching the pattern, such as Smith, Sutherland, etc.

The final filter in the sequence of Figure 6 is a display filter 59 which has a corresponding interface provided by display filter box 54 as shown in Figure 5. The display filter 59 is selected by the user from a menu of available display filters after selecting the display tab 44 of Figure 4. In the present example, the user needs to select a display filter 59 to be downstream of the grep filter 58 in order to allow the display on data display area 21 of the results selected using the grep filter. In Figure 5, data objects selected by the grep filter 58 are displayed as respective icons 22 within the data display area 21. The random distribution of positions of the icons 22 is implemented by selection of a display filter 54 having a scatter graph facility to allow randomly assigned two-dimensional image coordinates to be plotted within the data display area 21.

The information presented by each of the icons 22 may similarly be controlled by choice of appropriate display filters, as described below, for example to add colouring which is dependent upon characteristics of the object and associated text and image display boxes which are viewable when the user selects a specific data icon.

### Control of the User Interface via a User Interface Channel

The manner in which the user interface presents the filter boxes 24 in the filter display 23 for interactive control of the filters will now be described.

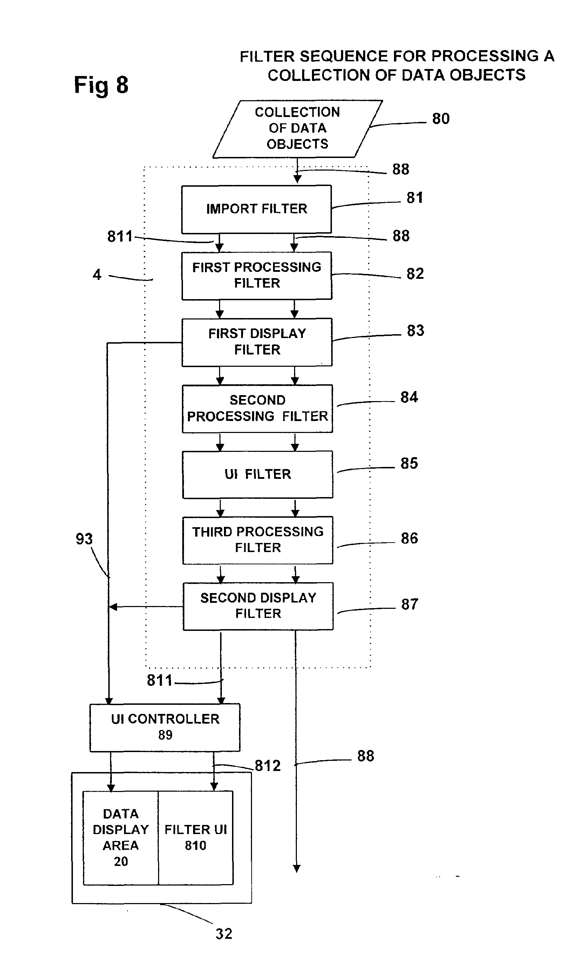

Figure 8 illustrates an example of a selection of filters constituting a particular user selected application for processing a collection 80 of data elements. For convenience, the previously described example of retrieval of patent documents will be again utilised so that the collection of data elements is constituted by patent data objects stored in the data memory 6.

The sequence of filters in Figure 8 consists of an import filter 81 for importing the collection 80 of data objects from the data memory 6, a first processing filter 82, a first display filter 83, a second processing filter 84, a user interface filter 85, a third processing filter 86, and a second display filter 87. Display information is communicated from the first and second display filters 83 and 87 to the user interface controller 89 via data display channel 93 to enable data to be displayed in the data display area 20.

Each of the above filters receives an input of data objects via data channel 88 and outputs data objects via the data channel to the next successive filter in the sequence. The final filter in the sequence is the second display filter 87 has no connection to further filters and conceptually may be regarded as connected to a data sink.

Each of the filters 81 to 87 also generates user interface control data which is input to a user interface controller 89 for controlling a filter user interface 810 constituted in this example by the appearance of the filter boxes 24 in the filter display window 23 of Figure 2. The user interface controller 89 also controls the display of data icons 22 in the data display area 21 of display screen 20.

User interface control data is communicated between adjacent filters in the sequence and between the final filter 87 and the user interface controller 89 via a user interface channel 811. The user interface control data is constituted by a user interface description object originated by the import filter 81 and which comprises code in the form of a document written in XML (eXtensible Markup Language). The user interface description object when output from the import filter 81 thereby comprises code which describes in a Markup language which can be interpreted by the user interface controller 89 the manner in which a corresponding filter box 24 is to be displayed in the filter display window 23. The code will define for example the class of filter (i.e. whether it is a feeder, worker, limit, system or display filter) and will indicate the name of the filter to be displayed in the filter box. The code will also define any text boxes to be displayed for the input of user data and any buttons to be displayed for selection by the user, or similar controls by which the user may interact using a conventional pointing device such as a mouse or keyboard.

This user interface description object is communicated via the user interface channel 811 to the first processing filter 82 which modifies the code to add a description of the manner in which the first processing filter is to be represented in the filter user interface 810. Similarly, each successive filter in the sequence modifies the code of the user interface description object to include a respective component so that ultimately the object output to the user interface controller 89 contains information completely defining the required filter user interface 810 for this particular sequence of filters. Each component will generally correspond to a respective one of the filter boxes.

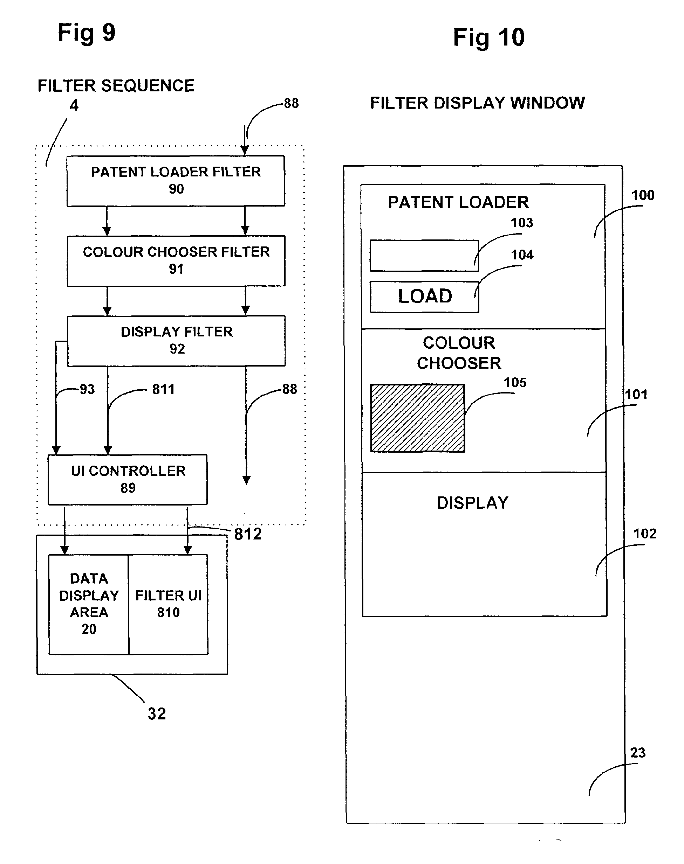

An example of the manner in which the code is generated and modified will now be described for the application comprising the sequence of selected filters shown in Figure 9 and which has a corresponding user interface represented by the contents of filter display window 23 of Figure 10.

The sequence of filters of Figure 9 comprises a patent loader filter 90 for loading patent information in the form of a collection of data objects, a colour chooser filter 91 which determines the inherent colour of each data object passing through the filter in response to user selection of the chosen colour, and display filter 92 which outputs display information for all data objects which are input to the display filter for display on the data display area 21 at two-dimensional positions determined by position information carried by each respective object. The display information is communicated to the user interface controller 89 by data display channel 93.

The corresponding user interfaces for each of these filters is illustrated schematically in Figure 10 and consists of the patent loader filter box 100, the colour chooser filter box 101 and the display filter box 102.

The user interface description object originated by the patent loader filter contains a description of this filter as illustrated by the code at Appendix 1. (All of the following Appendices have been simplified by adopting a pseudo code which is representative of but does not correspond exactly to the actual XML code utilised). This code is intended ultimately to be read by the user interface controller 89 which includes a parser for parsing the code. When the parser reads <filter>, it then expects a filter definition, and when the parser reads <class>, it then reads the filter class which in this example is indicated as being an import filter.

The parser then reads <name> and determines the filter ID and the filter name.

The parser then reads <controls> and then expects the definition of the user interface for the filter which is provided when parsing <textbox>, which in this case is indicated as being a text box descriptor. The controller 89 may then use this information to associate the patent loader filter box 100 with the patent loader filter 90.

The parser then reads <size>, thereby obtaining the number of characters, in this case 20, that the text box will display.

The parser then reads <UIconstraints> to determine the set of constraints. In this example, the constraint "visible" is set to true so that the text box will be visible in the filter box 100 and constraint "enabled" is also set true so that the user interface is enabled to allow interaction with the filter.

If on the other hand, the constraint "visible" had been set to false, the filter would still exist but the filter box 100 would cease to be displayed. If "enabled" had been set to false, the user interface provided by the filter box 100 would be disabled. The parser then reads the definition <button>. This definition includes <size> for defining the width of the button (104) when displayed in the filter box 100.

This code therefore defines the patent loader filter box 100 such that the user may input text to the text box 103 for defining a pointer to the collection of data objects and may initiate the loading of the collection by selecting the button 104.

The user interface description object output from the patent loader filter 90 is communicated via the user interface channel 811 to the next filter in the sequence which in this example of Figure 9 is the colour chooser filter 91. The colour chooser filter 91 appends to the user interface description object the code defining the user interface for the colour chooser filter which is shown as the colour chooser filter box 101 in Figure 10. The code is illustrated in Appendix 2. When parsed by the parser of the user interface controller 89, this code will indicate that the filter is of the processing class and is named "colour chooser". The <controls> definition provides a colour selecting icon which is defined in terms of size (50 pixels wide) and colour red.

The appended user interface description object is output from the colour chooser filter 91 via the user interface channel 811 to the display filter 92 which appends its own code for describing the display filter box 102 of Figure 10.

Finally, the user interface description object is output to the user interface controller 89 which parses the code and generates data which is output to the display 32 via a further data channel 812 to generate the filter user interface window 810.

The effect in this example of loading the collection of data objects will be that they are coloured red and displayed. If the user makes any changes to the parameters displayed in the filter boxes 100 and 101, the controller 89 directs messages to implement the changes to the filters and a new user interface description object is generated so that the display within the filter display window 23 is updated accordingly.

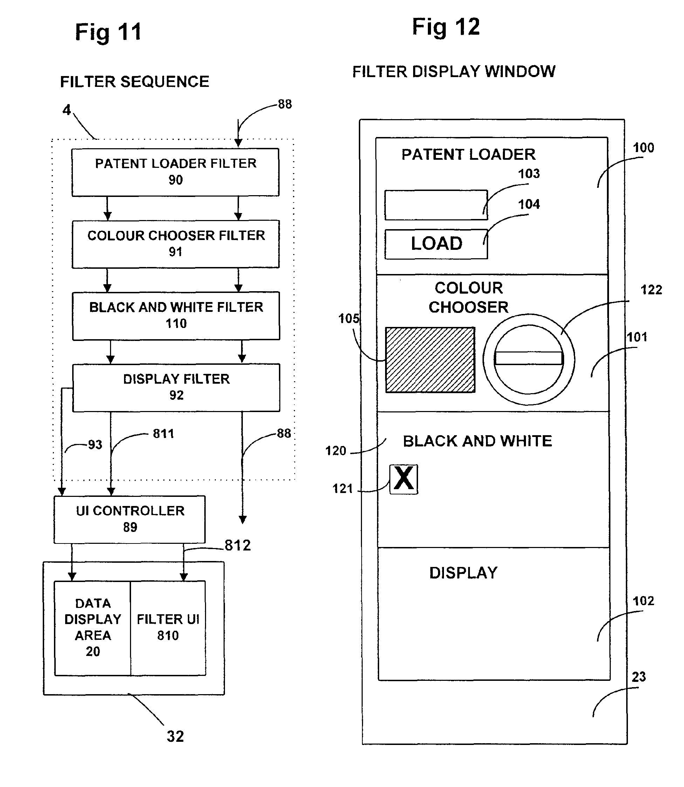

The user may choose to add an additional filter as illustrated by the example of Figure 11 to form a new application in which a further processing filter is added. In this example, a "black and white" filter 110 is added after the colour chooser filter 91, this "black and white" filter having the function of removing all colour information from each data object passing through the filter. A corresponding filter box 120 appears in the filter display window 23 as shown in Figure 12 and includes a check box 121 which the user may check by selecting the box if the user requires previous colour filters in the sequence to be overridden.

If therefore the check box 121 is not selected, the black and white filter will have the effect of changing to black and white only those data objects which have not been previously colour coded by colour filters upstream of the black and white filter in the sequence. If however the check box 121 has been selected, any previous colour attributes added by colour filters in the sequence will be also overridden by the black and white filter.

In the example of Figures 11 and 12, a colour chooser filter 91 is placed upstream of the black and white filter 110 so that, if as illustrated in Figure 12 the user has selected the check box 121 such that the black and white filter is to override previous colour filters in the sequence, it would be inappropriate for the filter box 101 of the colour chooser filter to invite the user to set a colour to be applied to data objects passing through the filter. Under these circumstances therefore, the black and white filter 110 automatically disables the user interface provided by filter box 101 for the colour chooser filter 91. This is possible because the user interface description object carrying the code determining the user interface for the colour chooser 91 must pass through the black and white filter 110. The black and white filter 110 changes the code by setting the constraint "enabled" to false within the <controls> definition of the colour chooser filter 91. The resulting code output from the black and white filter 110 in the user interface description object is illustrated in Appendix 3. The result of setting the "enabled" parameter false is illustrated in Figure 12 in which the colour chooser filter box 101 exhibits a disabled icon 122 to indicate to the user that the colour chooser filter 91 is disabled.

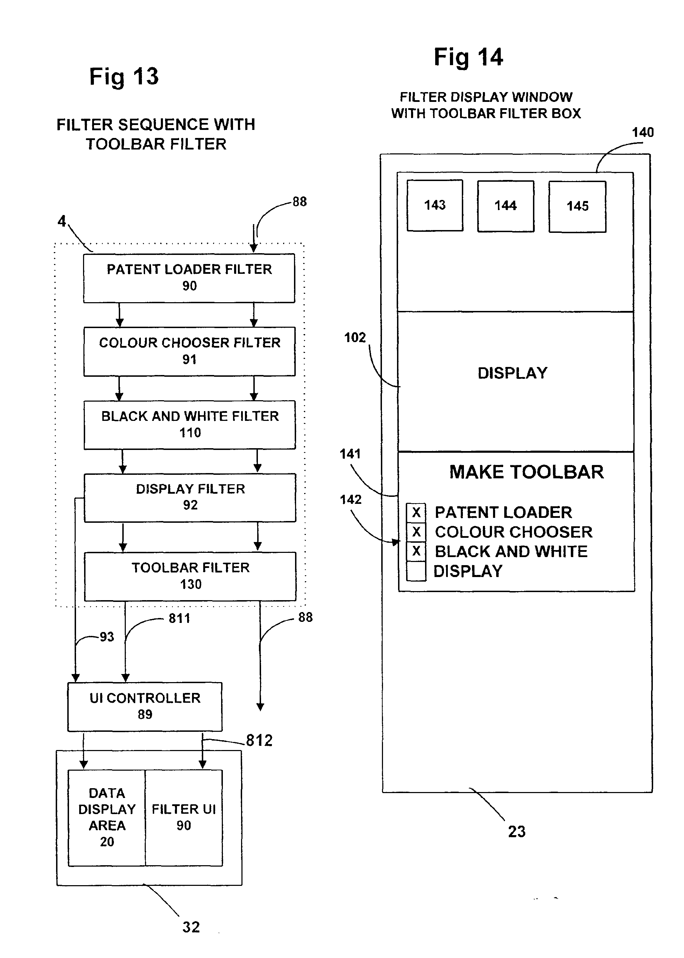

An example will now be given with reference to Figures 13 and 14 of a user interface filter whose sole purpose is to rewrite the user interface description object communicated by the user interface channel 811 from preceding filters in the sequence and then pass on the interface description object in amended form to subsequent filters in the sequence of selected filters.

In this example, a toolbar filter 130 is described which has the effect of compressing the user interfaces of a number of other filters into a single toolbar 140 which is displayed within the filter display window 23 in addition to a toolbar filter user interface box 141. The toolbar filter 130 as shown in Figure 13 is inserted into the sequence of selected filters downstream of the display filter 92 and receives as its input via the user interface channel 811 the user interface description object containing user interface control data for defining the user interfaces of each the loader filter 90, colour chooser filter 91, black and white filter 110 and display filter 92. The toolbar filter box 141 displays a series of check boxes 142 allowing the user to select which of the filter user interfaces are to be replaced by the toolbar 140. In this example, the user has checked against patent loader, colour chooser and black and white but not against display.

The resulting display in the filter display window 23 therefore consists of the toolbar 140, the display filter box 102, and the toolbar filter box 141.

The manner in which the toolbar filter 130 modifies the code in the user interface description object is illustrated in the amended code at Appendix 4 which includes relevant portions of the code.

The user interface controller 89 parses the code and will determine that the first three filters in the stack are members of a toolbar TB1. Parameters define their ID in the toolbar and the popup element defines what is shown when one of a series of icons 143, 144 and 145 representing the patent loader filter, colour chooser filter and black and white filter respectively is selected by the user using the mouse and cursor. The code defines the action resulting from such selection to be one of causing the original filter user interface to appear in a form corresponding to the filter boxes 100, 101 and 120 of Figures 10 and 12.

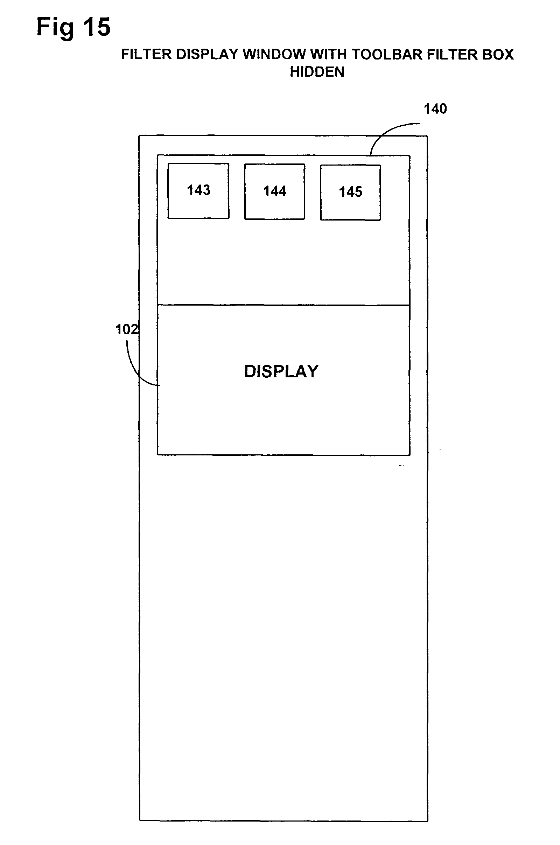

User interface filters such as the toolbar filter 130 will often be regarded as development tools allowing the development of a variety of applications saved for future use using application memory 9. For such applications, it may not be desirable to display to the user the filters used solely as development tools during application development. For example, the toolbar filter 130 may be provided with the facility to make the toolbar filter box 141 become invisible. Selection of this facility within the toolbar filter box 141 by deselecting the "Display" box results in the constraint "visible" being set to false in the code description output in the user interface description object from the toolbar filter 130. The information defining the resulting application containing the sequence of filters may then be stored. When subsequently reused, the appearance in the filter display window 23 will be as shown in Figure 15 in which the toolbar filter box 141 of Figure 14 is hidden from view. Similarly, other filters used for application development may be utilised and subsequently hidden before saving the application.

In a further example, the user interface filter may be arranged to selectively hide parts of the user interface provided within a filter box. Where for example a filter box normally displays control features such as button for use selection, or displays parameters controlling the configuration of the filter, these features may be hidden. This may be desirable for example to conceal features used by the system developer from access by the end user.

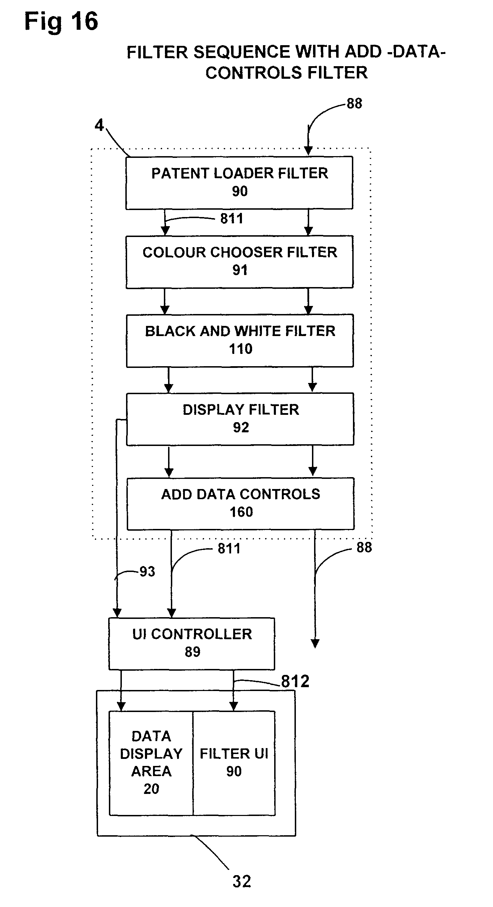

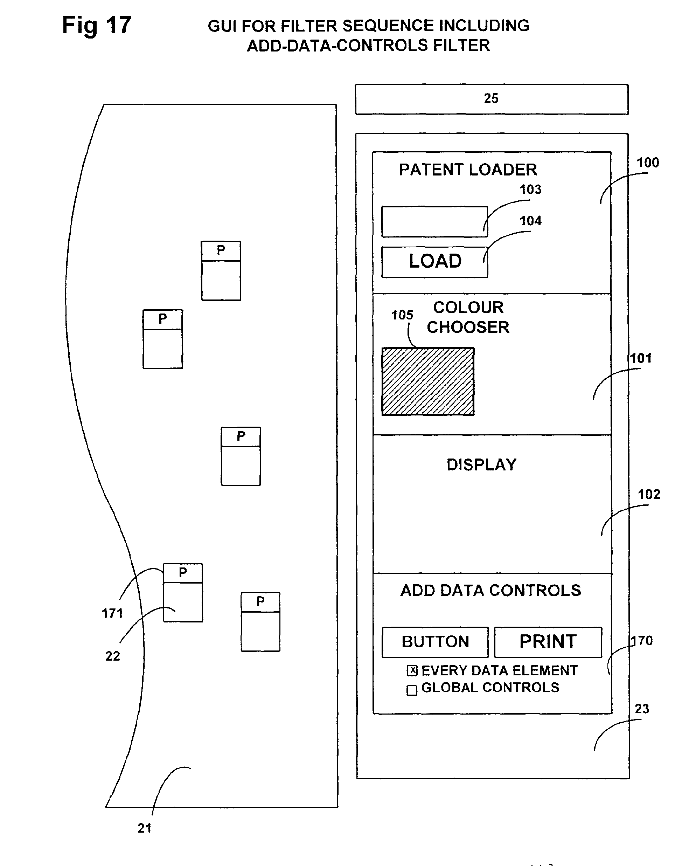

A further example of a user interface filter 85 is the "add data controls" filter 160 as shown in Figure 16 which has a user interface which is represented by the add data controls filter box 170 in Figure 17.

The effect of the "add data controls" filter is to add further controls to the data display area 21 such that each displayed data icon 22 has an associated control icon 171. In this example, the user has selected the option of every data element displayed having a print control icon 171 so that, if the user selects the icon 171, a print out of the document associated with the data icon 22 is obtained.

The code added to the user interface description object by the add data controls filter 160 is illustrated in Appendix 5. The code first describes the "add data controls" filter 160 itself with its controls as shown in the add data controls filter 170. The add data controls filter box 170 may allow the user to alternatively provide functions such as "save" associated with buttons appended to the data icons 22, enabling the user to save documents selected from the display. The user may alternatively be able to invoke a help filter, a grep filter or a colour chooser filter by selection within the data display area 21 using controls provided by the "add data controls" filter.

The latter part of the code in Appendix 5 describes what is required of the user interface controller 89 when processing the display data received via the display channel 811. The code determines that the user interface controller 89 must add a description of a button 171 to each element's own description.

Each data element icon 171 may have its own user interface description code for example as shown at Appendix 6. These code objects communicated via the data display channel 93 would be parsed by the user interface controller 89 and each data element rendered as a small rectangle. With the add data controls filter in place as described above, the description of each data element would be modified to that illustrated in Appendix 7.

When parsed by the user interface controller 89, this determines that each data element will be rendered as a rectangle with a button located at the top edge. The button is sourced from the filter with ID=FID6, the user interface controller 89 thereby being able to link the action of selecting the button to a corresponding method defined by the add data controls filter 160.

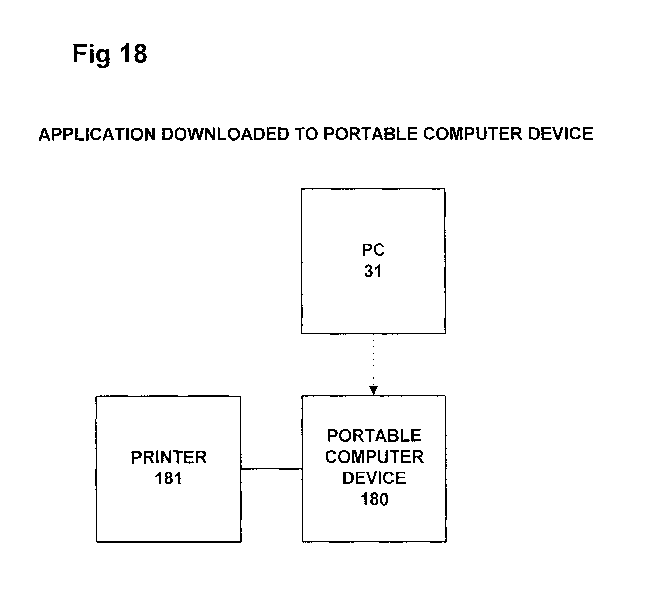

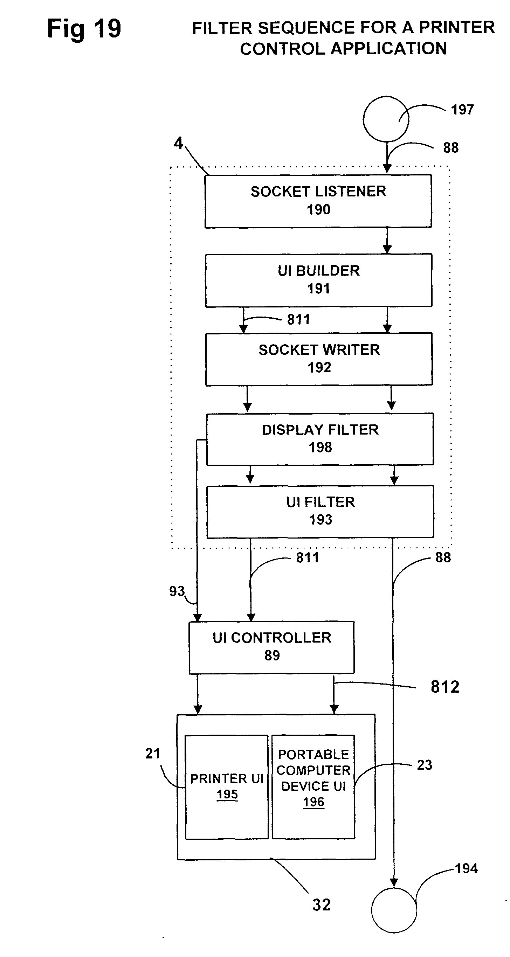

Figures 18 and 19 illustrate a further example in which the above described techniques for building an application using filters may be utilised. In this example, an application which is created using a personal computer 31 is downloaded to an external device in the form of a portable computer device 180 which may for example be a palm top computer or a mobile telephone provided with a processor and display screen. In Figure 18, the portable computer device 180 is shown docked to a printer 181 by means of which a user wishes to print data currently held in the portable computer device.

Figure 19 illustrates a filter sequence for the application authored using the system of Figure 1 and then downloaded to the portable computer device 180. The filter sequence is operating in an operating environment 4 of the portable printing device. In this case the application is a printer control application which is designed to generate a printer user interface 195 displayed in the display screen 32 of the portable computer device 180 for the control of the printer 181 to which it is connected via a cable or a wireless channel. Also shown in Figure 19 is a portable computer device user interface 196 displayed in the display screen 32 and consisting of filter boxes corresponding to filters in the sequence. Since the portable computer device 180 may be connected to any number of different printers having different operating parameters, it is preferable for the printer user interface 195 to be generated in accordance with the requirements of each printer 181. Accordingly, the sequence of filters of Figure 19 is constructed such that the application builds an appropriate printer user interface 195 for the printer 181 to which the portable computer device 180 is currently connected by responding to data transmitted by the printer and received by an input socket 197 of the portable computer device.

Accordingly, the sequence of filters in Figure 19 includes a socket listener filter 190 which listens for data received via the input socket 197 of the portable computer device 180 and outputs any received data to the next filter in the sequence.

The next filter in the sequence is a user interface builder filter 191 which has the task of building the user interface of the printer 181 in response to data received by data channel 88, thereby outputting a printer user interface object via data channel 88 to the next filter in the sequence.

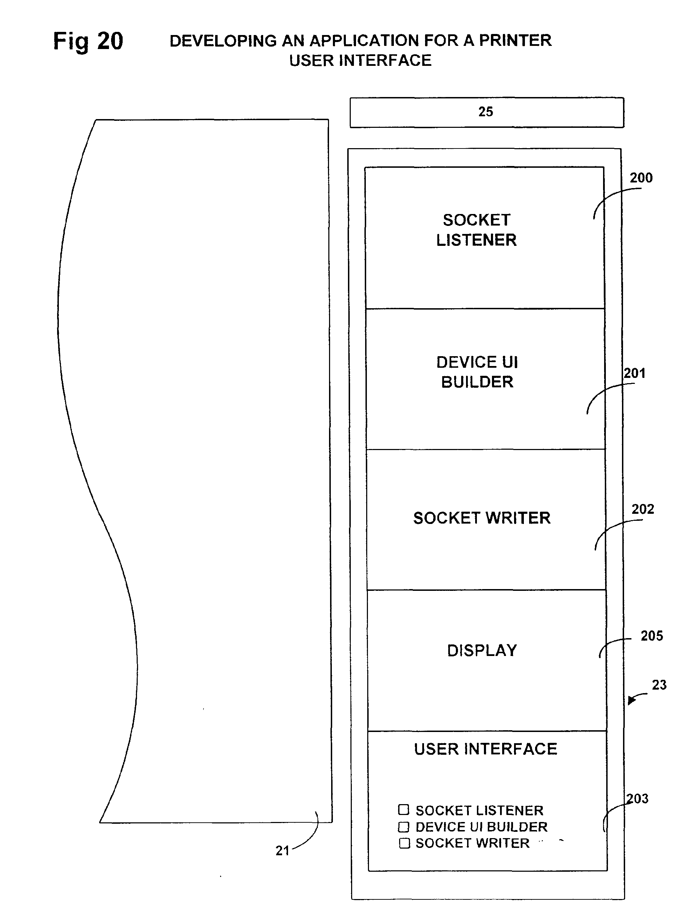

The next filter in the sequence is a socket writer filter 192 which has the function of outputting data to be transmitted to the printer via an output socket 194. Next, a display filter 198 has the function of outputting in the display channel 93 a display object generated from the printer user interface object to enable the user interface controller 89 to generate display signals for the printer user interface 195 to be displayed in the data display area 21. Finally, a user interface filter 193 has the function of enabling the developer of the application to selectively hide from display in the portable computer device user interface 196 the filter boxes corresponding to the filters in the sequence. As illustrated in Figure 20, a socket listener filter box 200, a user interface builder filter box 201, a socket writer filter box 202, display filter box 205 and user interface filter box 203 are displayed in the filter display window 23 during creation of the application. The developer may then instruct the user interface filter 193 to modify the user interface description object such that the filter boxes 200, 201, 202 and 203 are not displayed when the application is run. When the application is subsequently stored and downloaded to the portable computer device 180, the user of the device will then be unaware of the filter sequence underlying the application since the filter boxes will not be displayed. The only item which will be displayed will be that data object created (in this case) and output by the user interface builder filter 201.

When the portable computer device 180 is connected to the printer 181, handshake signals transmitted by the printer will be received by a socket of the device and the device will respond with an appropriate handshake signal. The printer 181 will then download data to the device to define the functionality and user interface requirements of the printer. The application running in the portable computer device 180 responds to this data using the above filter sequence in which the user interface builder filter 191 generates an appropriate user interface description object corresponding to the functionality and user interface requirements of the specific printer 181 to which the device is connected.

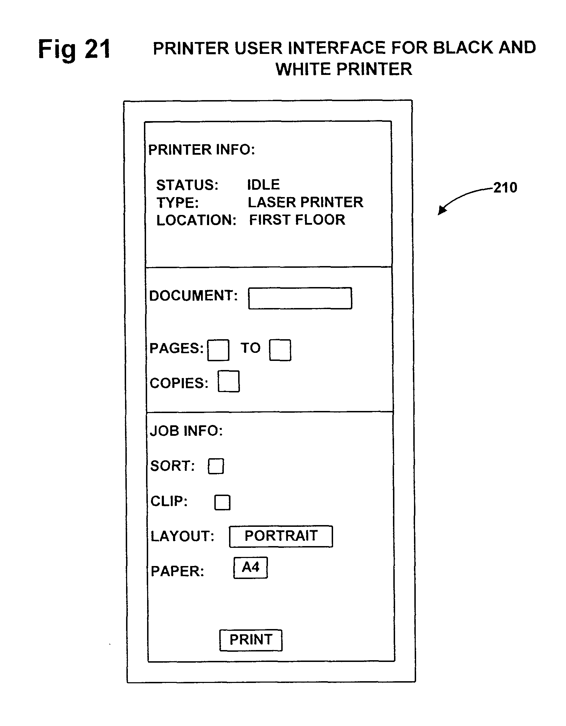

Figure 21 illustrates a printer user interface 210 as displayed by the portable computer device 180 in the case where the printer is a black and white printer.

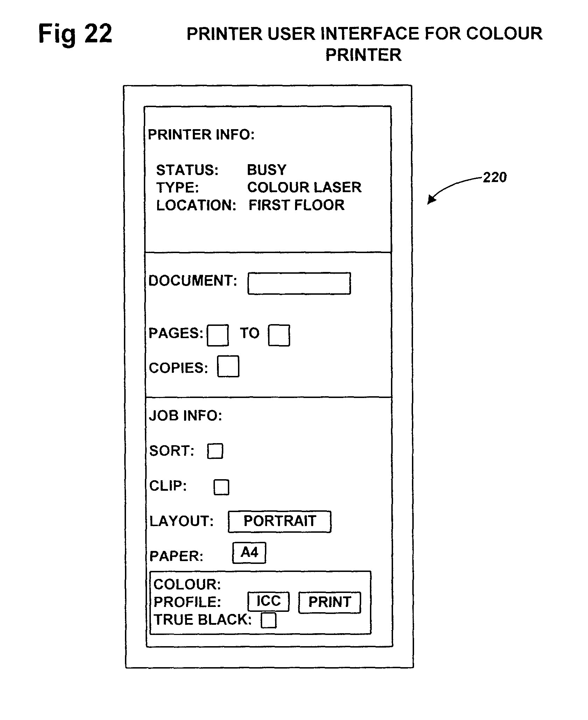

Figure 22 illustrates a printer user interface 220 as displayed by the portable computer device 180 when it is connected to a different printer which is a colour printer.

Any input from the user in response to the printer user interface, such as for example selection of a print button, will result in input of corresponding data to the user interface builder filter 191 which outputs corresponding data to the socket writer filter 192. The socket writer filter outputs data to the printer 181 via socket 194 as illustrated in Figure 19.

The printer 181 will then respond by performing the print function selected by the user.

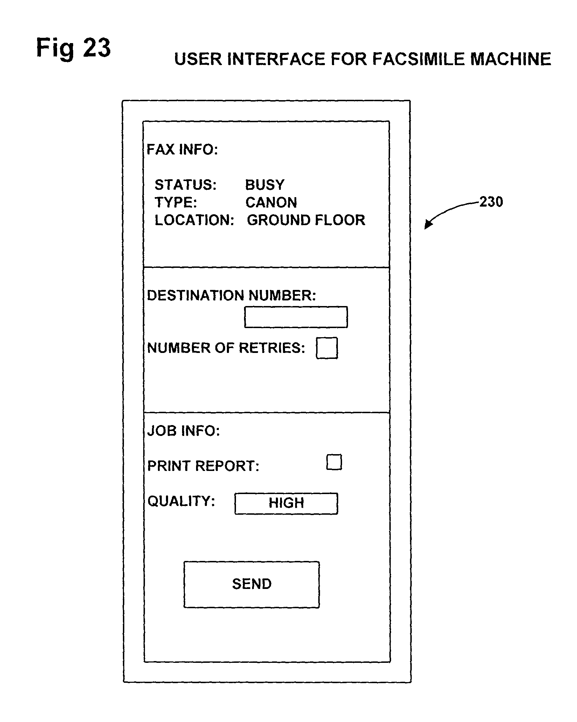

The portable computer device 180 may similarly be connected to other external devices such as a facsimile machine, in which case a user interface 230 generated by the user interface builder filter 191 may appear as shown in the example of Figure 23.

In an alternative arrangement, the user interface builder filter 191 may generate the printer user interface as a user interface description object communicated via the user interface channel and displayed in the filter display window 23.

The generated object may more generally therefore be regarded as a peripheral device control object which defines a user interface for control of a peripheral device to which the portable computer device (or any other such external device running the application) is connected in use.

The sequence of filters may optionally include further filters which modify the peripheral device control object, for example to apply user preferences to the operation of the peripheral device. For example, where the peripheral device is a printer, a filter may be added to limit the choice of paper size to A4 size.

Interoperability of such external devices with the portable computer device 180 requires that a common protocol or communications standard is utilised for exchanging data with the portable computer device 180. As indicated above, this protocol may require that the data defines the user interface to be presented to the user via the display screen of the portable computer device 180. Alternatively, the data protocol may be such that this user interface information is not closely defined and may for example simply comprise a definition of the functionality of the portable computer device 180. The user interface builder filter 191 may then construct an appropriate user interface from knowledge of the functionality of the portable computer device 180. For example, if the printer function protocol states that the printer 181 supports both black and white and colour printing, then the user interface builder filter 191 will be required to map this device function protocol to user interface elements corresponding to a combo box with two choices, i.e. for selecting monochrome or colour operation.

An application having a sequence of filters as described above with reference to Figure 19 will enable portable computer devices to generate appropriate user interfaces when coupled to peripherals such as printers 181, even when the printers are upgraded to have more facilities requiring modified user interfaces, provided that the upgraded printer outputs the required data according to the predetermined protocol.

### The Help Filter

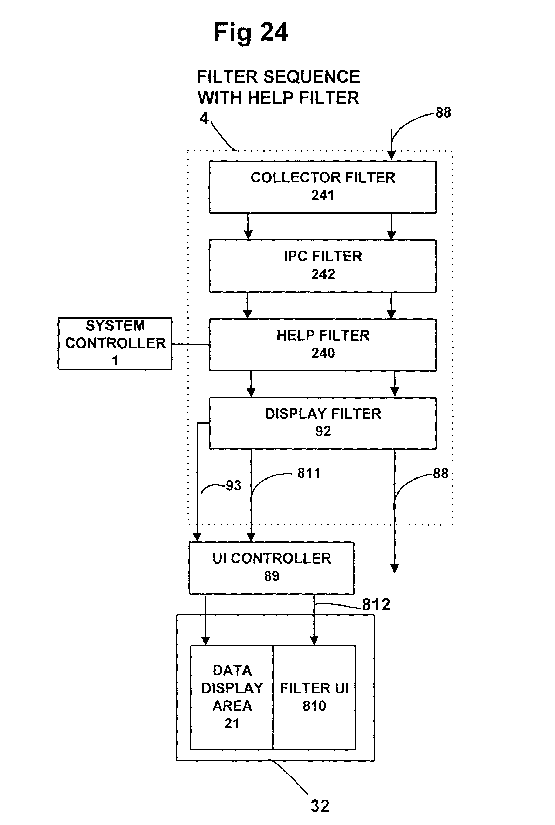

The user of an application using the above filter system may be provided with help information by means of a help filter 240 as illustrated in Figure 24 which provides an example of an application comprising a number of filters used for processing the results of a patent database search.

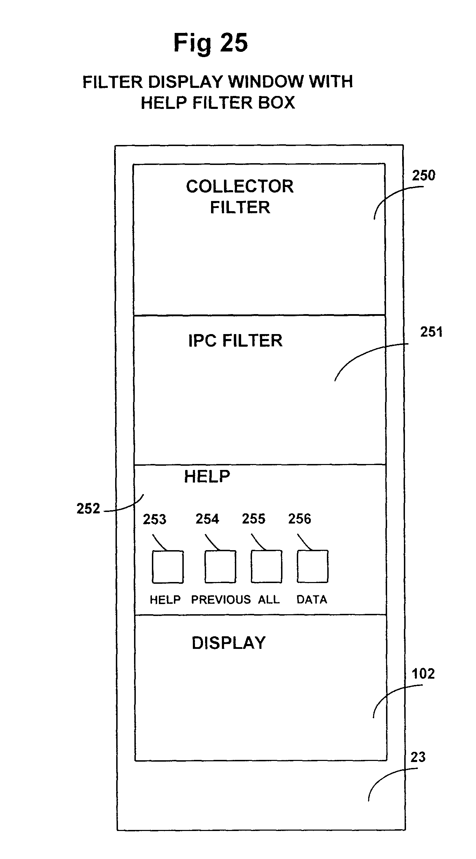

Figure 25 illustrates the filter display window 23 corresponding to the sequence of filters in Figure 24, the filter display window including a stack of filter boxes 250,251,252 and 102.

The sequence of filters in Figure 24 comprises a collector filter 241, an IPC (International Patent Classification) filter 242, the help filter 240 and a display filter 92. The sequence of filters is connected by a data channel 88 which also inputs data objects from an external source and is also connected by a user interface channel 811 which communicates a user interface data object to user interface controller 89. The display filter 92 also outputs a data display channel 93 for outputting display objects to the user interface controller 89 for display in the data display area 21.

The above sequence of filters functions within operating environment 4 in the manner described above with reference to Figure 1.

In Figure 25, the sequence of filters is represented in the filter display window 23 by a collector filter box 250, an IPC filter box 251, a help filter box 252 and display filter box 102.

The help filter box 252 presents a series of buttons for user selection, including a HELP button 253, a PREVIOUS button 254, an ALL button 255 and a DATA button 256.

The sequence of filters of Figure 24 exists when a user of an application comprising the collector filter 241, the IPC filter 242 and the display filter 92 requires assistance in the form of a help screen and, using the filter selector window 25 of Figure 4, selects the display tab 44 and thereafter selects insertion of a help filter from the available display filters in the library 5. The user inserts the help filter 240 at a desired location in the sequence of filters in Figure 24 using a drag and drop technique in which a filter icon within the filter selection window 25 is dragged and dropped to the desired location in the stack of filter boxes in the filter display window 23. As shown in Figure 25, the help filter box 252 is inserted between the IPC filter box 251 and the display filter box 152 so that the resulting position of the help filter 240 is as shown in Figure 24.

The immediate effect of inserting the help filter 240 is to stop the flow of all data objects via the data channel 88 from reaching the next filter in the sequence which is the display filter 92. Any data previously displayed in the data display area 21 will therefore disappear.

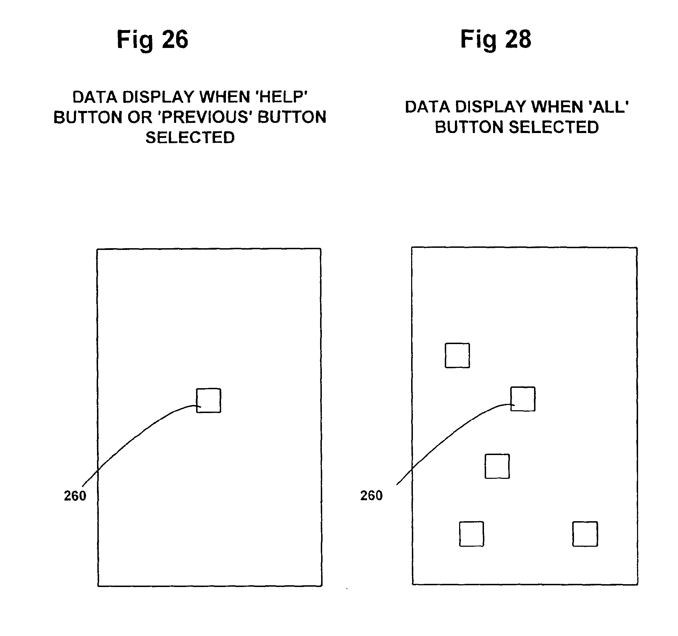

The user then has a number of options for utilising the help filter 240. The first option is selection of the help button 253. In response to this selection, the help filter 240 outputs a single help document object via the data channel 88 which is received by the display filter 92 and results in a corresponding output via the data display channel 93 to the user interface controller 89. The data display area 21 then displays a single help object icon 260 as shown in Figure 26. Selection of this icon 260 by the user results in a display within the data display area 21 of a help document which describes the overall function of the help filter.

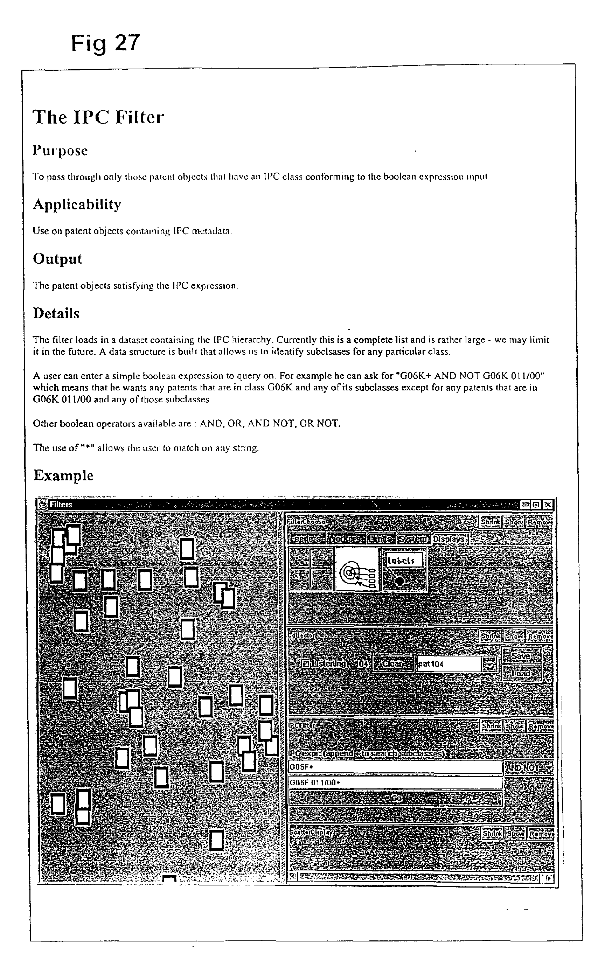

The second option available to the user is the selection of the PREVIOUS button 254 within the help filter box 252. The help filter 240 responds to the selection by requesting from the system controller 1 the identity of the preceding filter in the sequence of filters, in this case the IPC filter 242. Given this information, the help filter 240 then outputs a single help document object which, when processed by the display filter 92 results in the display of a help icon 260 as shown in Figure 26. When the icon 260 is selected by the user, this results in the display of a help document 270 as shown in Figure 27. The help document of Figure 27 describes the IPC filter using text in a number of appropriate fields and also provides a graphical illustration 271 of a typical display to the user resulting during use of the IPC filter.

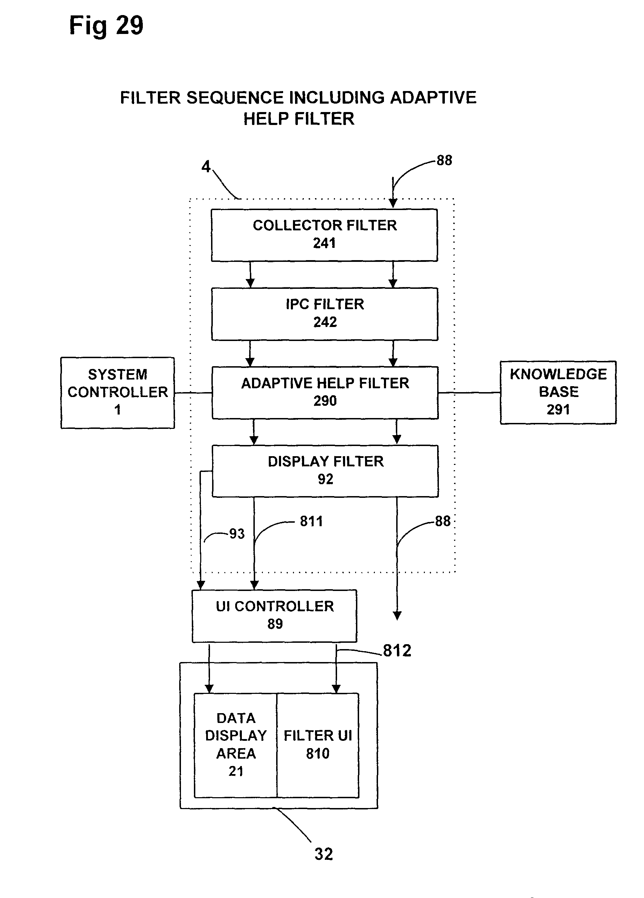

A third option available to the user is selection of the ALL button 255. In response to this selection, the help filter 240 requests from the system controller 1 a list of all filters in the system including those held in the library of available filters 5, and given this information, the help filter outputs a collection of help document objects corresponding in number to the number of available filters in the library, each help document object being received by the display filter 92 and output via the display channel 93 so that the data display area 21 displays a number of help object icons 260 as shown in Figure 28. The user may then select any one of the help object icons 260 in order to view the corresponding help document, the icons 260 including identifying information to indicate to the user the name of each one of the available filters.

In this way, the user may gain access to help information in respect of any desired filter, either to facilitate use of the filter within the sequence or for the purpose of deciding whether to add such a filter from the library to the existing sequence.

A fourth option available to the user is selection of the DATA button 256. The help filter 240 responds to the selection by interrogating the type of data object which is currently being input to the help filter via the data channel 88 and, given this information, the help filter outputs a help document object corresponding to the type of data. This results in display within the data display area 21 of one or more help icons 260 corresponding to the data type, enabling the user to select a help object icon to view an appropriate help page relating to the data.

In the example of Figure 24, each of the help document objects which are output by the help filter contain a pointer to a stored help document in HTML (HyperText Mark-up Language). The user interface controller 89 retrieves the help document required from a library of help documents 11 as shown in Figure 1 via the system controller 1 using the pointer contained in the help document object to facilitate display of the object in the user interface 2.

In an alternative embodiment, the help filter 240 contains code defining each help document corresponding to the library of filters 5, thereby obviating the need for the library of help documents 11 shown in Figure 1. In this example, the help document object contains the HTML code defining the help page and the user interface controller 89 outputs the page to the data display area 21 in response to receiving this data via the data display channel 93.

After obtaining help appropriate to the user's requirements, the user may then remove the help filter 240 from the sequence, thereby enabling the flow of data objects to resume to the display filter 92 and similarly resulting in the removal of the help filter box 252 of Figure 25 from the filter display window 23.

Figure 29 shows an alternative arrangement in which an adaptive help filter 290 is inserted into a sequence of filters and obtains from the system controller 1 information as to the identity and position in the sequence of other filters in the sequence. From this information, the adaptive help filter 290 intelligently tailors the output of this filter to the user via the data display area 21 by referring to a knowledge base 291. Help information available from such a knowledge base 291 could for example include advice on how to reconfigure a sequence of filters by changing the order of the filters or replacing one of the filters with a more appropriate filter.

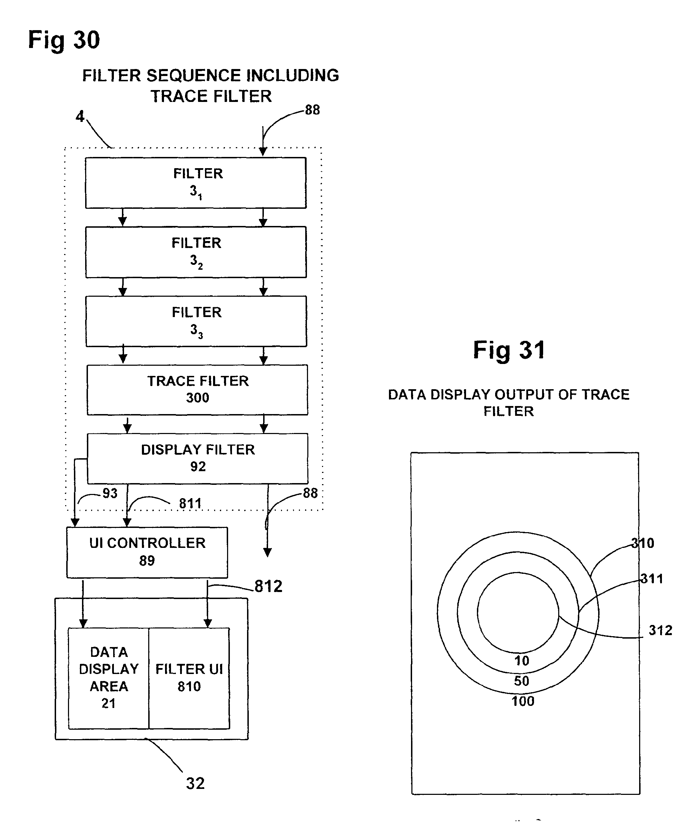

A further example of a help filter is a trace filter illustrated in Figure 30 in which the trace filter 300 is inserted into a sequence of filters. Including the trace filter 300 in the sequence of filters allows data to be collated as to the number of data objects output by each filter in the sequence, thereby for example providing a diagnostic tool for detecting bottlenecks in the application defined by the sequence of filters. The trace filter outputs a help document object which when processed by the display filter 92 causes the output to the data display channel 93 of a display object to graphically represent the flow of data objects through the filters in the sequence using a series of concentric circles as shown in Figure 31. The outer-most circle 310 represents the first filter 3₁ in the sequence and is annotated with a number indicating the number of data objects output from this filter. Similarly, the next inner-most circle 311 represents the second filter 3₂ and is similarly annotated, and the inner-most circle 312 represents the third filter 3₃. In this example, the number of data objects leaving each filter in the sequence is 100, 50 and 10 respectively.

The display of circles may overlay the display of data objects from the display filter.

### Bi-directional Filters

The sequence of filters 3 in the filter system of Figure 1 is arranged in an order which defines a forward direction corresponding to the direction in which data objects are passed from filter to filter. In some circumstances, it may be advantageous for the filters to pass control objects in the opposite direction, from filter to filter, in a reverse direction which is opposite to the above defined forward direction.

Filters having the capability to transfer data and control objects in the forward and reverse directions respectively are described in the following embodiments in which such filters are referred to as being bi-directional.

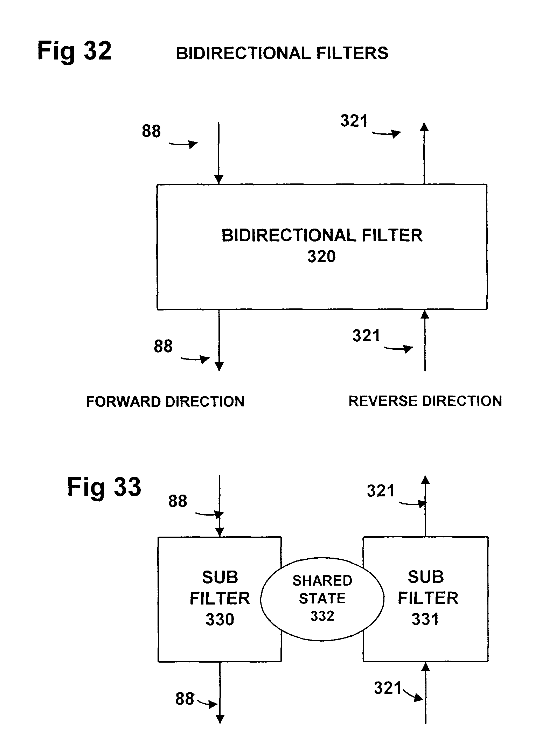

Figure 32 illustrates schematically such a bi-directional filter 320 in which data channel 88 carries data objects in the forward direction and control channel 321 carries control objects in the reverse direction.

It may be appropriate in some instances for bi-directional filters to be composed from a pair of sub-filters 330 and 331 as illustrated in Figure 33 and for the sub-filters to have a shared state 332, i.e. a shared memory which can be accessed by either one of the sub-filters 330 and 331.

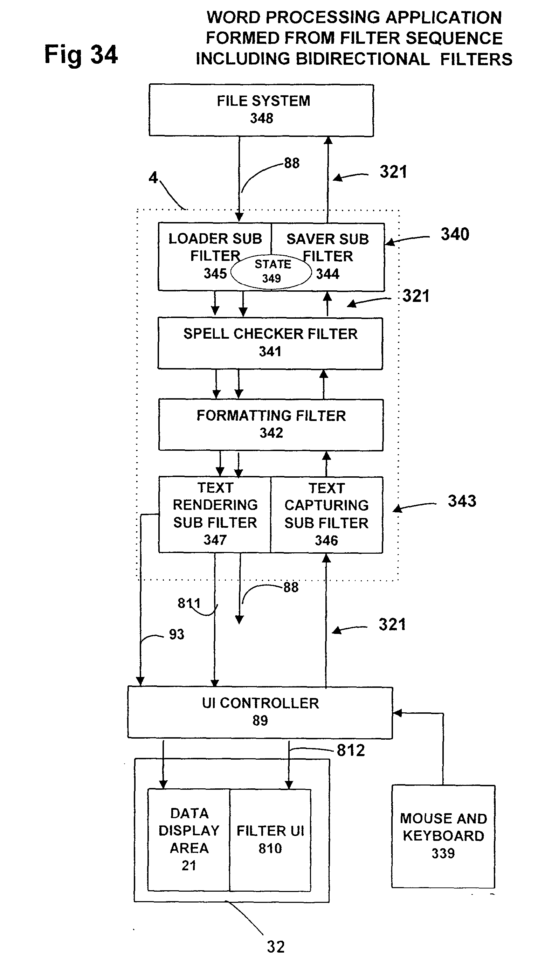

Figure 34 illustrates an example of a sequence of filters in which each of the filters in the sequence is a bi-directional filter. In this example, the sequence of filters forms an application for performing word-processing. The sequence comprises an interface filter 340, a spellchecker filter 341, a formatting filter 342, and a text processing filter 343.

The interface filter 340 is formed by a pair of sub-filters comprising a saver sub-filter 344 and a loader sub-filter 345. The text processing filter 343 is formed by a pair of sub-filters comprising, a text capturing sub-filter 346 and a text rendering sub-filter 347.

The filters 340, 341, 342 and 343 process a stream of data objects communicated via data channel 88 from a file system 348 containing text files, each one of which constitutes a respective data object.

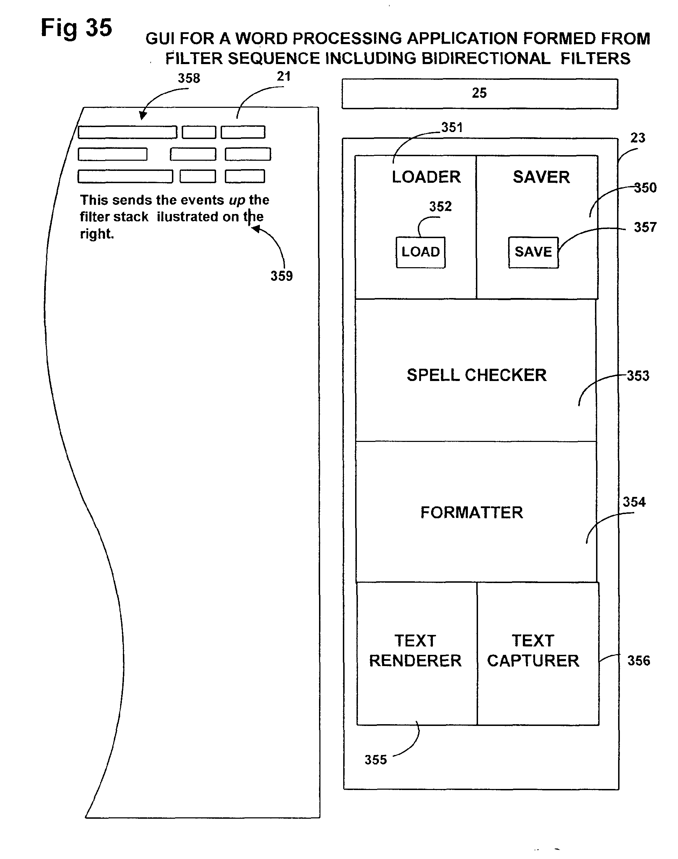

The corresponding graphical user interface is represented schematically in Figure 35 in which the filter display window 23 displays filter boxes corresponding to each of the filters 340, 341, 342 and 343 in the same order as in the corresponding filter sequence and data display area 21 displays the text forming one of the text files when selected by the user.

The displayed graphical user interface corresponding to the interface filter 340 comprises a saver filter box 350 and a loader filter box 351, the loader filter box 351 including a LOAD button 357 and the saver filter box being provided with a SAVE button 352.

A spellchecker filter box 353 provides the user interface for the spellchecker filter 341 and a formatter filter box 354 provides the user interface for the formatting filter 342.

A text renderer filter box 355 provides the user interface for the text rendering sub-filter 347 of the text processing filter 343 and a text capturer filter box 356 provides the user interface for the text capturing sub-filter 346.

The loader sub-filter 345 enables a user to selectively load text files from the file system 348, the loading function being performed in response to selection by the user of the LOAD button 357 in the loader filter box 351 of Figure 35. The loader sub-filter 345 has a shared state 349 in common with the saver sub-filter 344 and uses the shared state to store the file loaded from the file system 348. The control channel 321 enables the user to input commands via the mouse and keyboard 339 of the user interface controller 89, editing commands being communicated via the filter sequence in the reverse direction to enable the file stored in the shared state 349 to be edited. The loader sub-filter 345 generates a data object containing the edited text stored in the shared state 349 which is communicated in the forward direction via the filter sequence, the text rendering filter 347 generating an output of display objects via the data display channel 93 to thereby cause text 358 to be displayed in the data display area 21 as shown in Figure 35. When the user is satisfied that the text has been correctly edited, the user may choose to save the edited file by selecting the SAVE button 352 of the saver filter box 350, in response to which the saver sub-filter 344 outputs a control object to the file system 348 via the control channel 321 in the reverse direction to enable the appropriate text file to be updated in accordance with the user's edits.

In the example of Figure 35, a displayed text file includes a block of text 358 which the user wishes to edit by adding the words "the illustrated text" and the word "up" in italics. The user types the required phrases and selects italics using a control key of the keyboard 339 or using the mouse to select a displayed icon (not shown). The text capturing sub-filter 346 receives corresponding editing commands from the user interface controller 89 via the control channel 321, the commands corresponding to a series of objects corresponding to keyboard or mouse events. The text capturing sub-filter 346 passes the objects to the formatting filter 342 which consolidates the characters contained in the editing commands into complete words. The formatting filter 342 then outputs the formatted control objects to the spellchecker filter 341 which performs spellchecking on each of the words. The output of the formatting filter 342 includes appropriate Markup language to illustrate for example whether characters are italicised.

The spellchecking filter 341 applies additional Markup language to those words which are found to be misspelt both to flag the location of the error and to indicate the correct version of the word. This information is stored in the shared state 349 of the saver sub-filter 344 and subsequently output by the loader sub-filter 345 to be passed via the spellchecker filter 341, formatting filter 342, text rendering sub-filter 347 and user interface controller 89 to be displayed in the data display area 21.

The user then has the opportunity to implement the correction proposed by the spellchecker filter 341.

In Figure 35, a user has just edited text 358 by inserting the word "up" and the word "ilustrated" (mis-spelled). The following is a series of events that occurs:
1. The user finishes typing in the mis-spelled word "ilustrated" and presses the space key of the keyboard to move the cursor 359 away from the word boundary.
2. The edit is captured by the text-capturer filter along with any other control events. An example of such a control event is that, in the edit, the user could type "Control-i" to indicate that the word "up" is to appear in italics. These control events are sent together with the relevant input text.
3. The formatting filter 342 receives the control events and some text to which the control event applies and marks up the text accordingly. Continuing with the italics example, the formatting filter would output the string <i>x</i> where x is the new text character. The formatting filter 342 would also group words and paragraphs and decide what marked up data and events to send on to the next filter in the sequence in the reverse direction. For example, rather than passing on every character input, it waits until a complete word has been entered and then passes on the word. In the Figure 35 example, the output by the formatting filter includes:
   *<word location =* l><i>up</*i*></word>;<*word location* = m>ilustrated</word>.
4. The spellchecker filter 341 receives this marked up data. It looks for instances of the *word* mark-up and processes the data contents of such elements. So "up" will be accepted but "ilustrated" will fail. The spellchecker filter 341 marks up all mis-spelled words so the output may contain:
   *<misspelled><wordlocation=m>* ilustrated</*word*></misspelled>.
5. The saver sub-filter 344 receives this data and caches it in the shared "state" 349 of this bi-directional filter. In this way it is able to build up the entire edited text file as each new piece of input data arrives. If the user selects the SAVE button 352, this cached file is output to the file system 348. If the user presses the LOAD button, a new file from the file system 348 will be loaded into the shared state 349.
6. Considering again the flow of data in the forward direction, if the data has not been spell checked yet then the spellchecker filter 341 will function as above. This may occur if the user chooses a new text file to be loaded from the file system 348. The spellchecker filter 341 takes this marked up text and replaces all occurrences of <*misspelled* > words with some formatting instructions. In this example, the spellchecker filter 341 applies markup to display a red background to the offending word. For example, the spellcheck filter 341 outputs:
   *<word location> = m><colour background = red*>ilustrated</*colour*></word>.
7. The formatting filter 342 examines the data that has been marked up with formatting instructions and converts these to control characters which the text rendering sub-filter 347 will understand, also taking into account the formatting instructions for the document (page size, document style etc.). For this example let this be a simple conversion to HTML. More sophisticated formatters may use style sheets or even advanced word-breaking algorithms with leading and kerning adjustments.
8. The text rendering sub-filter 347 takes the new data and renders it to the data display area 21. In this example, this would be through the use of an insertion into a java JEditor component that understands HTML.

The user sees the misspelt word he has typed highlighted with red background.

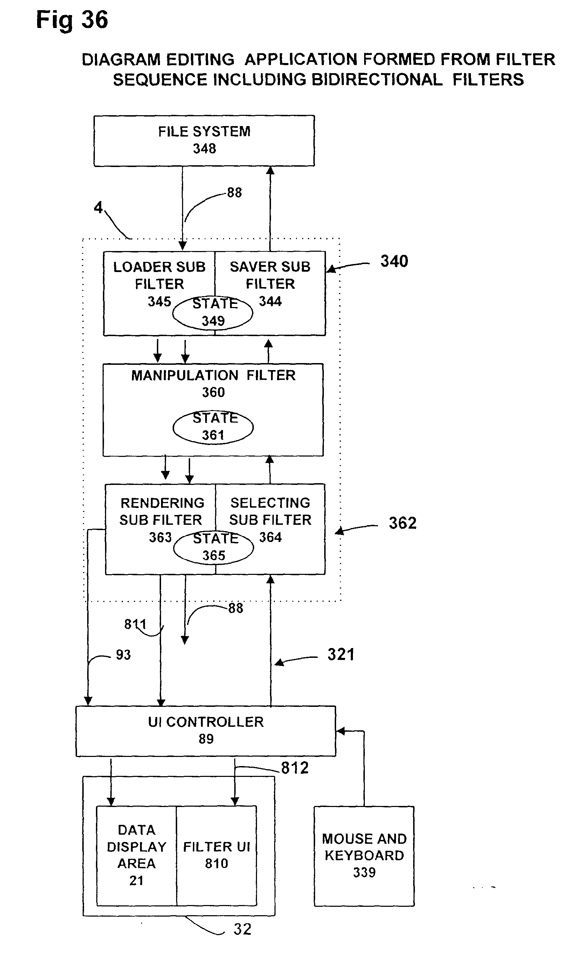

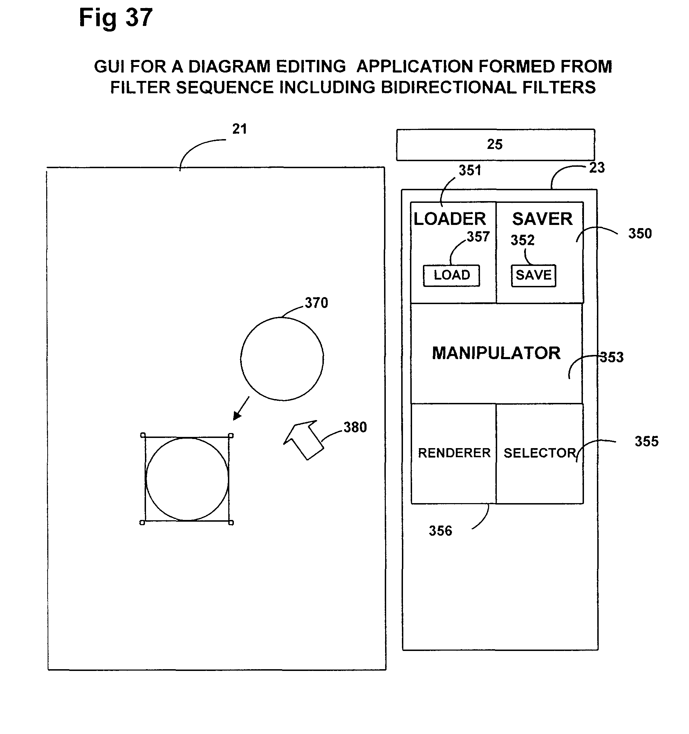

Figure 36 illustrates a further example of a sequence of bi-directional filters which in this case performs the function of editing a diagram and has a graphical user interface as represented schematically in Figure 37. Corresponding reference numerals to those of preceding figures are used where appropriate for corresponding elements.

The filter sequence of Figure 36 includes an interface filter 340 which comprises a loader sub-filter 345 for inputting data objects from file system 348 and a saver sub-filter 344 for saving edited files to the file system.

The loader sub-filter 345 and saver sub-filter 344 have access to a shared state 349 for the caching of data during editing.

The loader sub-filter 345 outputs data objects in the forward direction to a manipulation filter 360 which stores the data objects in an internal state 361. The manipulation filter 360 outputs the data objects in the forward direction to a diagram processing filter 362 comprising a rendering sub-filter 363 and a selecting sub-filter 364, these sub-filters having a shared state 365 in which the received data objects are stored.

The rendering sub-filter 363 receives the data object from the manipulation filter 360 and outputs via display channel 93 a display object to the user interface controller 89, thereby causing the display area 21 to display representations of diagram objects such as circle 370 shown in Figure 7.

The selecting sub-filter 364 receives control objects communicated in the reverse direction via control channel 321 for editing the displayed data in response to user input via the mouse and keyboard 339 of the user interface controller 89.

Typically the user will wish to edit the diagram by selecting one of the displayed objects using the mouse and cursor and then applying an editing command to manipulate the object, for example by changing its size, orientation or position. It is first necessary to determine which of the displayed objects has been selected by the mouse actuation and this task is performed by the selecting sub-filter 364. The selecting sub-filter 364 relates the cursor position at which selection is made to the stored details of the displayed objects contained in the shared state 365 and identifies the selected diagram object. The selecting sub-filter 364 outputs in the reverse direction marked up data identifying the selected diagram object together with the editing command and this information is stored internally by the manipulation filter 360 in the state 361.

The state 361 already contains the stored data relating to displayed diagram objects and interprets the editing command to apply the required transformation to the selected diagram object. Typically this involves a geometrical transformation resulting in transformed data which is output in the reverse direction to the saver sub-filter 344 where it is stored in the shared state 349.

The loader sub-filter 345 automatically updates the displayed diagram objects from the edited data contained in the shared state 349, including the transformed object data, and the edited data is passed in the forward direction to be stored in the manipulation filter 360 and the rendering sub-filter 363 before being displayed to the user.

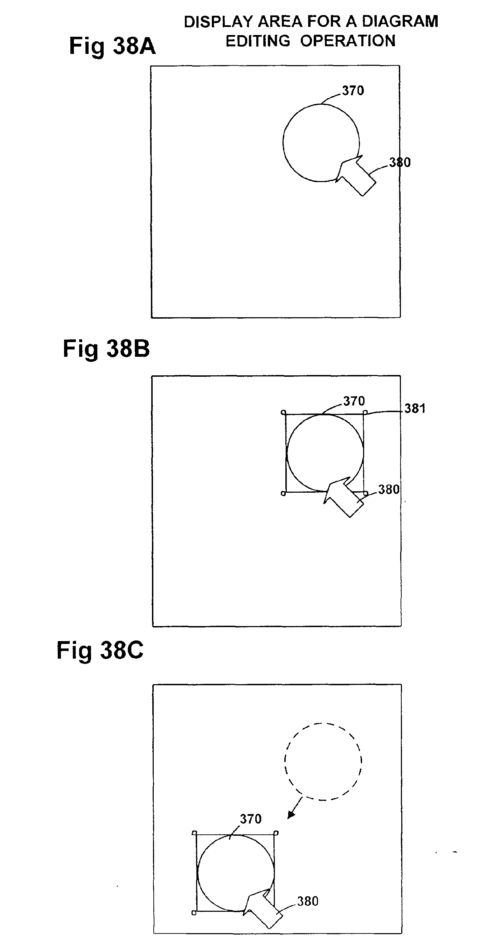

When the selecting sub-filter 364 identifies the selection of an object to be edited, this selection information is also made available via the shared state 365 to the rendering sub-filter 363 which modifies the data output via the data display channel 93 by the addition of a selection indicator to indicate to the user the selected object, the indicator taking, for example, the form of selection handles 381 or a selection frame appended to the selected diagram object. This is illustrated in Figures 38A, 38B and 38C as follows. In Figure 38A, the user positions the cursor 380 over the object 370 which he wishes to edit and selects the object by clicking the mouse.

This selection is detected by the selecting sub-filter 364, the object 370 being identified and communicated to the rendering sub-filter 363 which creates selection handles 381 which are displayed so as to be superimposed on the selected object as shown in Figure 38B.

The user then uses the position of the cursor to drag the selected object 370 to a new position as shown in Figure 38C. The mouse dragging action is interpreted as a command which is interpreted by the manipulation filter 360 which then applies the appropriate transformation in the form of a translation to the coordinates at which the object 370 is to be displayed.

The marked-up data output from the selector sub-filter 364 in this example may be of the form:
<selected><object id = o1/></selected><event><mousedrag from = 10,10 to = 5,5/></event>.

The effect of the transformation applied by the manipulation filter 360 is to change the original object data from the following:
<object id = o1><shape><circle x = 10, y = 10, r = 2/></shape></object>.
To an edited object data as follows:
<object id = o1><shape><circle x = 5, y = 5, r = 2/></shape></object>.

The user may choose to update the file in the file system 348 with the edited data by selecting the save button 352.

Data may thereby be edited using the flow of control objects in the reverse direction via the selecting sub-filter 364, manipulation filter 360 and saver sub-filter 344.

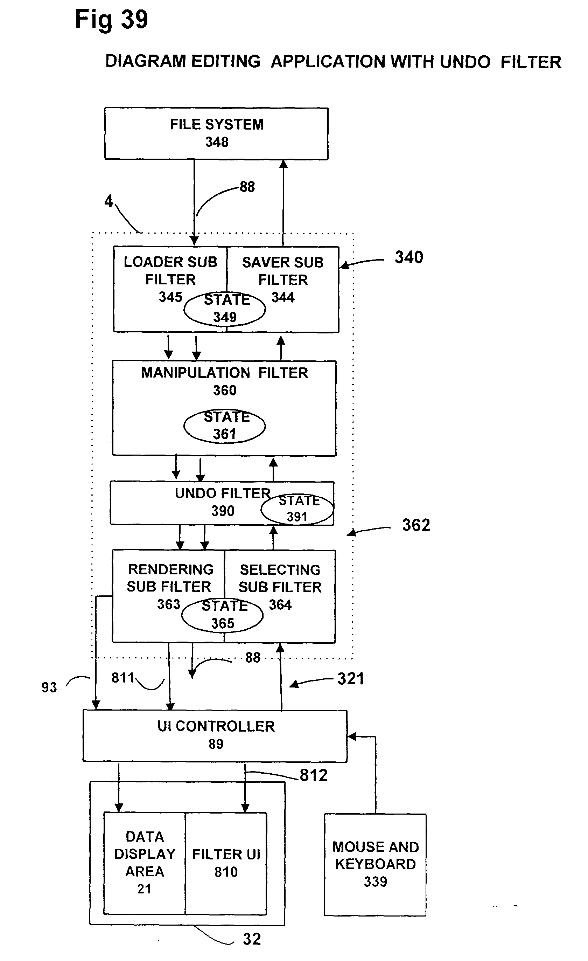

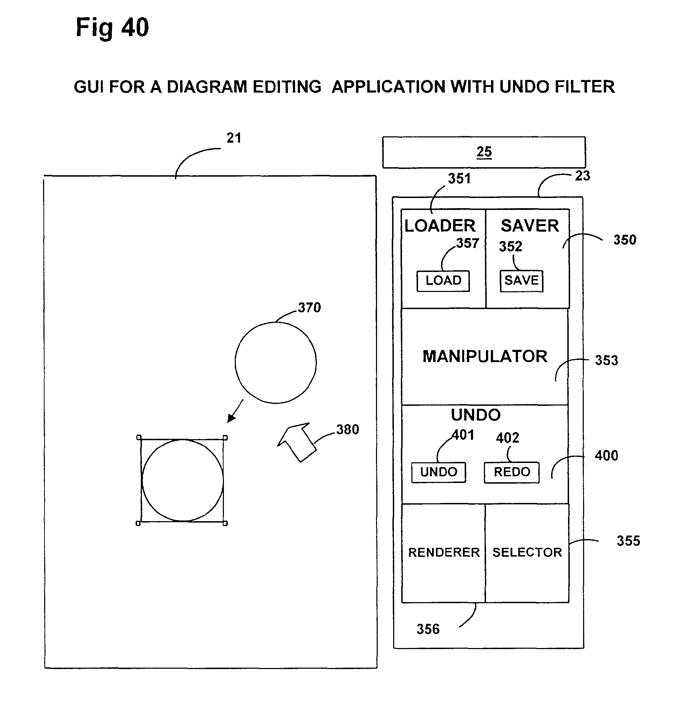

The filter sequence of Figure 36 may be modified to include an undo filter 390 as illustrated in Figure 39. The undo filter 390 includes an internal state 391 which stores edit commands received via the control channel 321 in the reverse direction. The corresponding graphical user interface illustrated in Figure 40 includes an undo filter box 400 which contains an undo button 401 and a redo button 402. In response to user selection of the undo button 401, the undo filter 390 generates a counter edit command which is output in the reverse direction to the manipulation filter 360 which implements the counter edit such that the diagram returns to its form prior to the previously received edit command.

In response to user selection of the redo button 401, the undo filter 390 generates an edit command corresponding to the previously undone edit command and outputs the command to the manipulation filter 360 which performs the necessary transformation to redo the edit.

A corresponding undo filter can be inserted into the filter sequence of the word processing application of Figure 34 so as to receive the edit commands from the text capturing sub-filter 346 and output appropriate counter edit commands to the formatting filter 342 in the reverse direction.

In an alternative embodiment, the undo and redo functions are implemented by storing the complete state before and after each edit so that for example the undo function simply requires retrieving the unedited version from memory.

### Implementation of Filters

The above described method of creating applications using filters could be implemented in a number of different ways but, in the currently preferred mode, a Java implementation is utilized with data objects, control objects and control events represented by XML elements. In this implementation, the filters become Java objects, each of which reads XML elements from an XML stream and writes XML elements to another XML stream.

The system is implemented at low level by a kernel in the form of an XML processor which includes a parser and an application programming interface. The parser is required by each filter to enable the filter to determine whether an XML element is one that the filter may act upon and to enable the filter to extract the necessary data.

At a higher level, input and output streams are defined, typically several streams being required for handling input and output.

The task of creating a stream, applying filters to it and tying the output of the sequence of filters to output devices etc. is the responsibility of the kernel. The kernel is also responsible for maintaining persistent streams of XML elements from whatever input file system is available. Persistent streams are those which retain their state between sessions, as for example in the case of XML documents represented by streams of XML elements. For a standard personal computer, streams provided by the system will include the mouse state (position and buttons), a keyboard stream, a system clock stream, and other data streams such as data entering the system through a network socket.

The above input streams are complemented by output streams including a display stream, an audio output stream and a data stream for data leaving the system via a network socket.

The above described embodiments may be implemented using a conventional personal computer without hardware modification. The preferred embodiment implemented using Java requires loading the personal computer with a Java platform defining Java classes for use by Java programs and a Java virtual machine for interpreting and executing byte codes obtained by compiling Java programs. In addition to a regular expression library containing expression utilities such as, for example, utilities used in string matching, the system requires an XML library containing utilities such as a parser and a UIML (user interface markup language) library containing software modules for handling user interface elements.

The developer of the system needs to create a set of Java user interface components such as a frame component for defining the window within which the display area is presented, an initialisation object to create a pallette of available filters displayed in the filter selector window 25, and handling-software for introducing filters into the sequence of filters within the operating environment 4. Software is also required to be developed to operatively connect the filters in the sequence in the required manner. This is preferably achieved by event handling software forming part of the operating environment. For example, for a given filter in the sequence, the output of the filter corresponds to a buffer for containing a data object to be output and event initiating software to generate an event detected by the event handling software of the operating environment. The next filter in the sequence responds to such an event by accepting the buffer contents.

A corresponding data structure exists for defining the manner in which the filter boxes 24 are displayed in the filter display window 23. The data structure is in tree form which is parsed whenever the data structure is updated by the user to provide an updated display in the filter display window 23. Changing this data structure is mirrored in a change in the corresponding tree of the operating environment data structure, thereby resulting in a change in the operative connectivity of the filters. As described above, the actual content of each filter box as a user interface is defined by a user interface object created by the filters themselves.

The end user of the system does not of course require knowledge of Java or programming and it is envisaged that the system will be sold as a software package for use with conventional desktop computers. The software package for example may comprise system software defining the system controller 1, operating environment 4 and a basic library of filters 5. The user may be offered additional filters to add to the library, for example to extend the capabilities of the system to new problems such as, for example, graphic design, desktop publishing, audio visual mastering, document archive storage and retrieval, database searching and Internet searching.

Since filters are designed to be interchangeable and reusable, new updates of filters may readily be substituted for existing filters by adding and deleting from the library of filters.

The following are examples of filters which may, in addition to the filters described above, be included in the library.

A folder filter may be used to group data objects into a folder such that, instead of displaying a set of data objects as individuals icons on the display area, a single folder icon appears. The individual data objects may be accessed and displayed by user selection of the folder icon using the mouse and cursor.

A clock filter is an example of a system filter. The clock filter when inserted into the filter sequence displays the time in the display area. This filter is responsive to a stream of constantly changing XML data required to update the clock.

A revisions filter may be used in a system shared amongst several users, each of which may make changes to a document being processed. The revisions filter makes changes made by the other users displayed in different colours.

A version control filter may be used for document handling. Inserting the version control filter into the filter sequence enables data objects to be modified to contain an attribute allowing version tracking. The version control filter may also retain versions of the document so that previously amended versions can be retrieved on demand.

A read-only filter may be inserted into a filter sequence to define an attribute of data objects which will subsequently prevent editing of defined fields of the data object.

Encryption and decryption filters may be used. For preparing a document for transmission to a remote site, an encryption filter may be inserted into a filter sequence to encrypt the data objects. At the remote site, the received data may be processed using an application comprising a filter sequence which includes a decryption filter to decrypt the data objects.

An image processing filter may be utilized to apply various types of image processing to data objects comprising images.

A screen saver filter may be inserted into a filter sequence close to the display filter in order to detect any lack of activity for a predetermined period and response by generating a screen save in the form of animations to be displayed on the screen. The filter would respond to detection of activity to cease generating the screen saver and revert to data display.

A print filter may be provided to enable selected data objects to be printed.

The user is not limited in the number of filters which he may select from the library to include in an application. The presence of a filter which is not in fact appropriate to the type of data objects currently being processed is not in itself problematic because the filters are constructed to be essentially transparent in this event. For example, if an image processing filter is included in an application which is currently processing documents not including image data, the data objects will simply be passed on by the image processing filter without having any effect on the data objects since the filter will parse metadata of the data object to determine whether any action is possible or appropriate.

The above described examples refer to a user interface in the form of a graphical user interface in which information is visually displayed. Other forms of user interface are possible including audio visual presentations or purely audio presentations of information.

The present invention as described above may be implemented using a computer providing with computer programs in the form of processor implementable instructions for controlling the processor to carry out the above described methods. Such programs may be stored on a storage medium so that an aspect of the present invention thus provides a storage medium storing processor implementable instructions for controlling a processor to carry out any one of the above described methods or combinations thereof.

The computer programs may be obtained in electronic form for example by downloading the code over a network such as the Internet. Thus in accordance with another aspect of the present invention there is provided an electrical signal carrying processor implementable instructions for controlling a processor to carry out any one of the methods described above.

Applications obtained by operating the system and method of the present invention may similarly be stored on a storage medium or communicated as an electronic signal. Such applications therefore constitute a further aspect of the present invention when in the form of processor implementable instructions, instructions stored on a storage medium or instructions communicated as an electronic signal.

Any carrier for storage or transmission of an algorithm for carrying out any one of the above described methods is considered to constitute an aspect of the present invention, including for example any hard wired circuit defining logic for this purpose.

The above described system and method relates to embodiments in which the sequence of filters defines a linear sequence of nodes without branches. Further embodiments are envisaged within the scope of the present invention in which the sequence of filters corresponds to a tree structure having branches which may divide and recombine to provide parallel processing or more complex processing structures. Such structures may for example include the features of having bidirectional filters, a user interface controlled by user interface control objects, and help object generators to assist the user in developing and using the system.

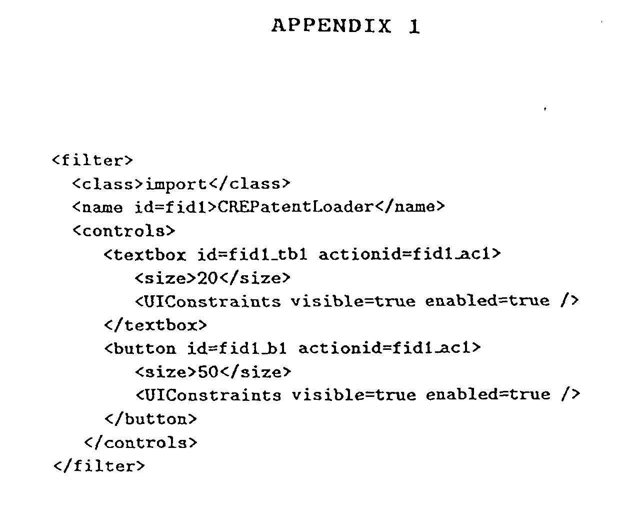

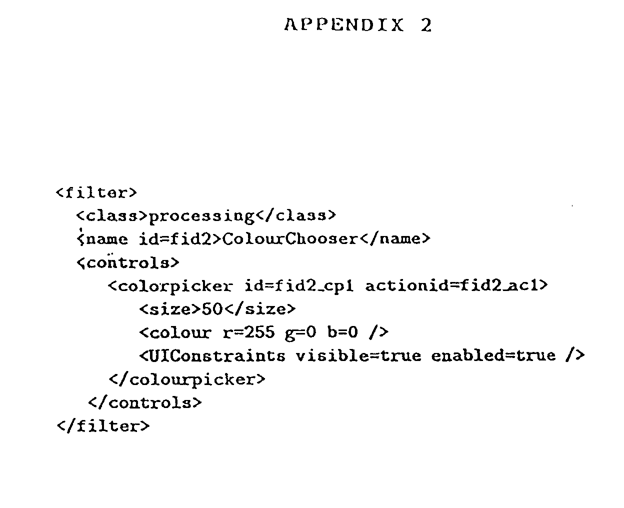

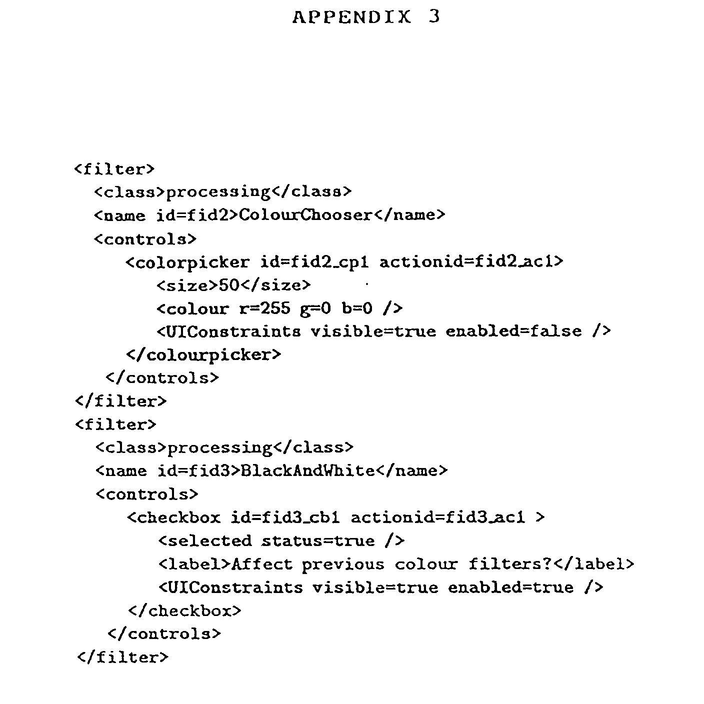

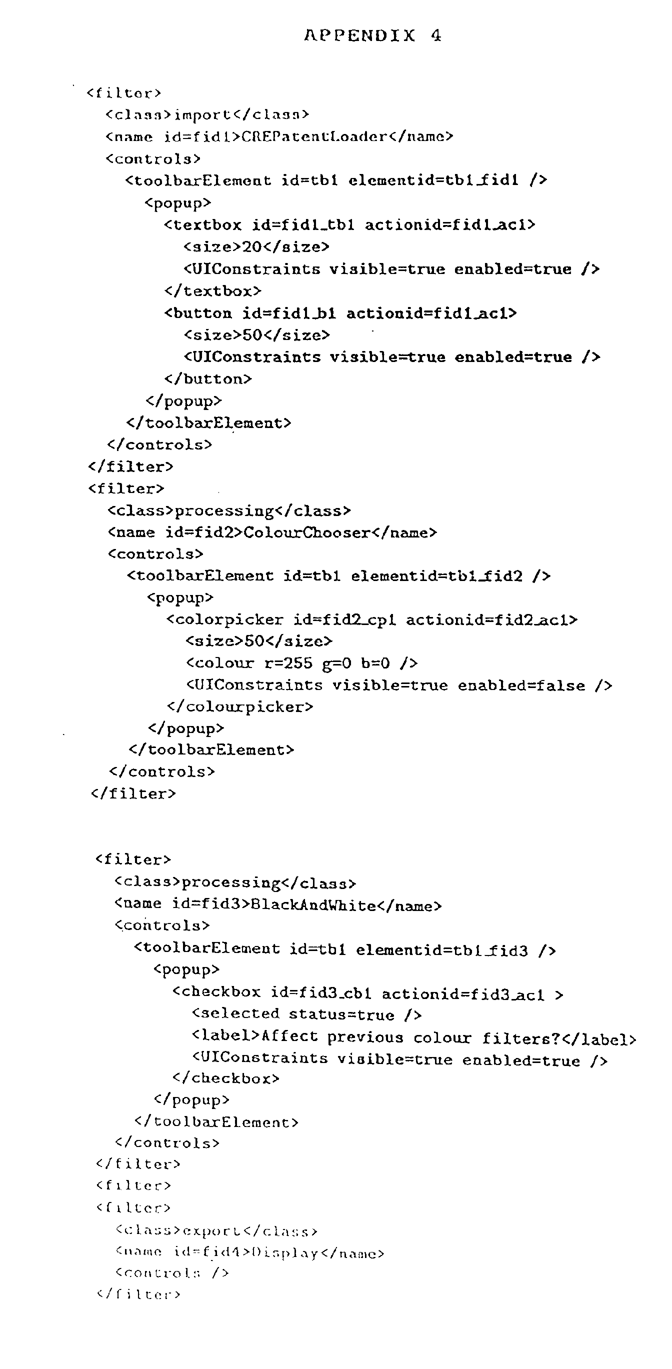

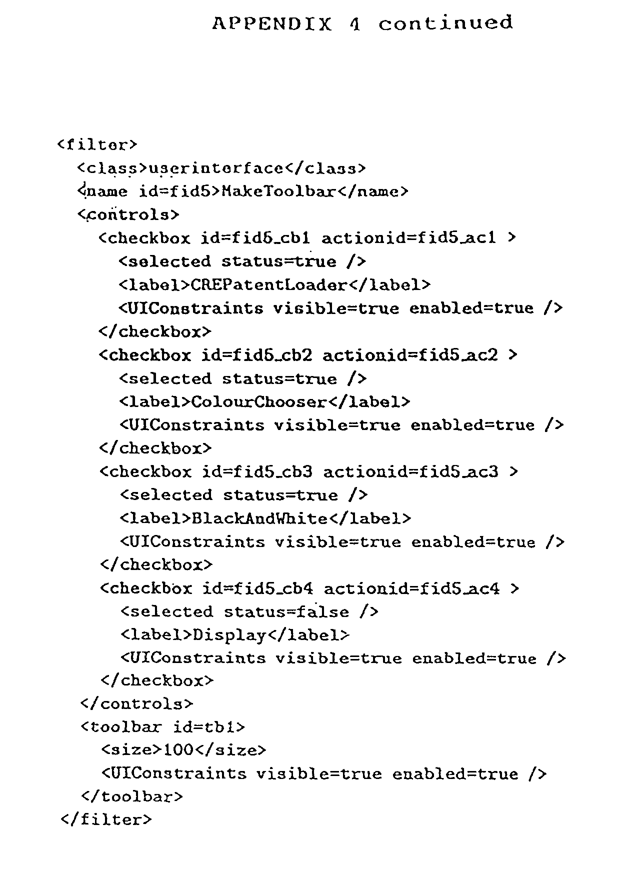

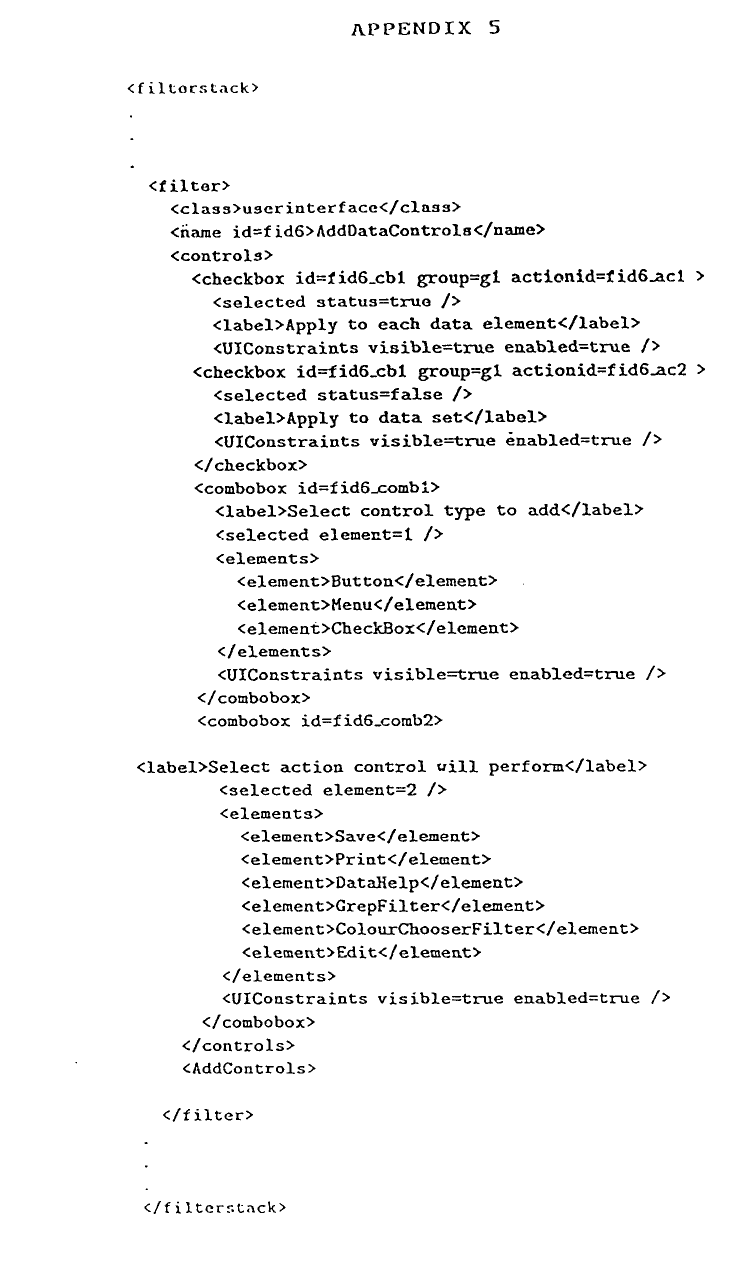

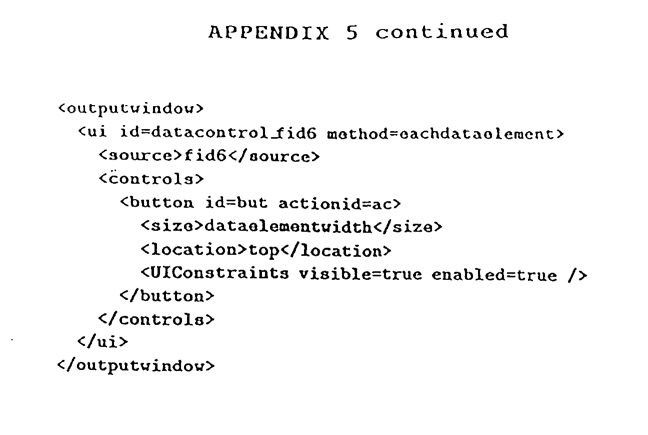

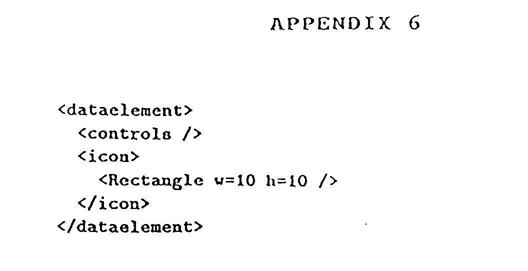

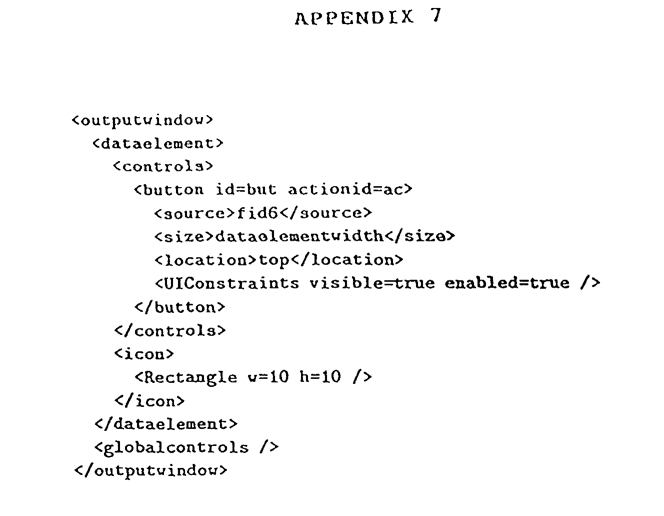

## Claims

1. Data processing apparatus for processing data objects and comprising:
a set of processing elements operable to perform respective processing tasks;
an operating environment receiving the processing elements in co-operable relationship;
a first channel defined by the operating environment and operatively connecting the processing elements in a sequence for communicating the data objects between successive processing elements in an order defined by the sequence;
a second channel defined by the operating environment for communicating a user interface control object between successive processing elements in the sequence;
and a user interface controller responsive to the user interface control object when output from a last processing element in the sequence to generate control data for controlling a user interface in use to present information to the user for controlling the processing elements.

2. Apparatus as claimed in claim 1 wherein each processing element is operable to edit the user interface control object to add a respective component of the user interface control object.

3. Apparatus as claimed in claim 2 wherein at least one of the processing elements is operable to edit a component of the user interface control object corresponding to a preceding processing element in the sequence.

4. Apparatus as claimed in claim 3 wherein the control data generated by the user interface controller is for defining a display area of a graphical user interface within which information defined by each component is presented in a respective window.

5. Apparatus as claimed in claim 4 wherein the user interface controller is operable to generate the control data such that the respective windows are positioned in the display area in an order corresponding to the order of the sequence of processing elements in the operating environment.

6. Apparatus as claimed in any of claims 4 and 5 wherein the user interface controller is operable to generate the control data such that each window displays information defined by a respective component identifying the respective processing element to thereby indicate in use to the user the identity of processing elements in the sequence within the operating environment.

7. Apparatus as claimed in any of claims 4 to 6 wherein the component of the user interface control object corresponding to at least one of the processing elements defines code for enabling the respective window to display control parameters for controlling the processing element.

8. Apparatus as claimed in any of claims 4 to 7 wherein the component of the user interface control object corresponding to at least one of the processing elements defines code for enabling the respective window to display data which is input via the user interface to the processing element.

9. Apparatus as claimed in any of claims 4 to 8 wherein the component of the user interface control object corresponding to at least one of the processing elements defines code for enabling the respective window to display a control button for selecting an operational mode of the processing element.

10. Apparatus as claimed in any of claims 4 to 9 wherein one of the processing elements is operable to perform a toolbar function of editing the user interface control object such that the components of preceding processing elements in the sequence are modified such that their respective windows are displayed in compressed form as a toolbar.

11. Apparatus as claimed in any of claims 4 to 10 wherein one of the processing elements in the sequence is a user interface processing element operable to edit the user interface control object but which is transparent to the data objects.

12. Apparatus as claimed in any of claims 3 to 11 wherein at least one of the processing elements is operable to selectively edit one or more components of the user interface control object in respect of preceding processing elements in the sequence so as to remove at least part of the information presented by their respective windows from the display area.

13. Apparatus as claimed in any preceding claim comprising a system controller operable to select said processing elements from a library of processing elements and to load selected processing elements into the operating environment in said sequence determined by the user.

14. Apparatus as claimed in claim 13 wherein the system comprises a memory and the controller is operable to store in said memory the set of processing elements as a customised application for subsequent reuse.

15. Apparatus as claimed in any of claims 13 and 14 comprising output means for outputting code defining an application defined by the set of processing elements for input in use to an external apparatus having a further operating environment within which the application is operable.

16. Apparatus as claimed in any preceding claim in combination with a user interface defining a data display area for displaying representations of the data objects, a selector window for displaying a library of processing elements for user selection, and a processing element display window containing a representation of the selected processing elements.

17. Apparatus as claimed in any preceding claim wherein at least one of the processing elements comprises means for adding control features to data objects communicated via the processing element, the control features comprising a data specific user interface control object for causing a respective control icon to be displayed in registration with each displayed data object when the user interface comprises a graphical user interface.

18. Apparatus as claimed in claim 17 wherein the processing element for adding control features to data objects comprises means for performing a processing task in response to selection of the control icon.

19. Apparatus as claimed in claim 18 wherein the processing task comprises causing data contained in the data object to be printed.

20. Apparatus as claimed in claim 15 wherein the sequence of processing elements comprises an object generating processing element for generating a peripheral device control object defining a user interface for controlling a peripheral device to which the external apparatus is connected in use.

21. Apparatus as claimed in claim 20 wherein the object generating processing element is responsive to at least one data object defining attributes of the peripheral device to generate the peripheral device control object such that it defines control data for controlling a user interface to present information to the user of the external device for controlling corresponding operating parameters of the peripheral device.

22. Apparatus as claimed in any preceding claim wherein the user interface control object comprises a document written in a markup language.

23. A data processing method for processing data objects and comprising:
loading a set of processing elements operable to perform respective processing tasks into an operating environment receiving the processing elements in co-operable relationship;
using a first channel defined by the operating environment and operatively connecting the processing elements in a sequence to communicate the data objects between successive processing elements in an order defined by the sequence;
using a second channel defined by the operating environment to communicate a user interface control object between successive processing elements in the sequence;
and operating a user interface controller responsive to the user interface control object when output from a last processing element in the sequence to generate control data controlling a user interface to present information to the user for controlling the processing elements.

24. A method as claimed in claim 23 wherein each processing element edits the user interface control object to add a respective component of the user interface control object.

25. A method as claimed in claim 24 wherein at least one of the processing elements edits a component of the user interface control object corresponding to a preceding processing element in the sequence.

26. A method as claimed in claim 25 wherein the control data generated by the user interface controller defines a display area of a graphical user interface within which information defined by each component is presented in a respective window.

27. A method as claimed in claim 26 wherein the user interface controller generates the control data such that the respective windows are positioned in the display area in an order corresponding to the order of the sequence of processing elements in the operating environment.

28. A method as claimed in any of claims 26 and 27 wherein the user interface controller generates the control data such that each window displays information defined by a respective component identifying the respective processing element to thereby indicate to the user the identity of processing elements in the sequence within the operating environment.

29. A method as claimed in any of claims 26 to 28 wherein the component of the user interface control object corresponding to at least one of the processing elements defines code for enabling the respective window to display control parameters for controlling the processing element.

30. A method as claimed in any of claims 26 to 29 wherein the component of the user interface control object corresponding to at least one of the processing elements defines code for enabling the respective window to display data which is input via the user interface to the processing element.

31. A method as claimed in any of claims 26 to 30 wherein the component of the user interface control object corresponding to at least one of the processing elements defines code for enabling the respective window to display a control button for selecting an operational mode of the processing element.

32. A method as claimed in any of claims 26 to 31 wherein one of the processing elements performs a toolbar function of editing the user interface control object such that the components of preceding processing elements in the sequence are modified such that their respective windows are displayed in compressed form as a toolbar.

33. A method as claimed in any of claims 26 to 32 wherein one of the processing elements in the sequence is a user interface processing element which edits the user interface control object but which is transparent to the data objects.

34. A method as claimed in any of claims 25 to 33 wherein at least one of the processing elements selectively edits one or more components of the user interface control object in respect of preceding processing elements in the sequence so as to remove at least one part of the information presented by their respective windows from the display area.

35. A method as claimed in any of claims 23 to 34 comprising a system controller which selects said processing elements from a library of processing elements and loads selected processing elements into the operating environment in said sequence determined by the user.

36. A method as claimed in claim 35 wherein the system comprises a memory and the controller stores in said memory the set of processing elements as a customised application for subsequent reuse.

37. A method as claimed in any of claims 35 and 36 comprising outputting code defining an application defined by the set of processing elements and inputting the code to an external apparatus having a further operating environment within which the application is operable.

38. A method as claimed in any of claims 23 to 37 wherein a user interface defines a data display area displaying representations of the data objects, a selector window for displaying a library of processing elements for user selection, and a processing element display window containing a representation of the selected processing elements.

39. A method as claimed in any of claims 23 to 38 wherein at least one of the processing elements adds control features to data objects communicated via the processing element, the control features comprising a data specific user interface control object causing a respective control icon to be displayed in registration with each displayed data object when the user interface comprises a graphical user interface.

40. A method as claimed in claim 39 wherein the processing element adding control features to data objects performs a processing task in response to selection of the control icon.

41. A method as claimed in claim 40 wherein the processing task comprises causing data contained in the data object to be printed.

42. A method as claimed in claim 37 wherein the sequence of processing elements comprises an object generating processing element which generates a peripheral device control object defining a user interface for controlling a peripheral device to which the external apparatus is connected in use.

43. A method as claimed in claim 42 wherein the object generating processing element responds to at least one data object defining attributes of the peripheral device to generate the peripheral device control object such that it defines control data controlling a user interface to present information to a user of the external device for controlling corresponding operating parameters of the peripheral device.

44. A method as claimed in any of claims 23 to 43 wherein the user interface control object comprises a document written in a markup language.

45. Data processing apparatus for processing data objects and comprising:
a set of processing elements operable to perform respective processing tasks;
an operating environment receiving the processing elements in co-operable relationship;
a first channel defined by the operating environment and operatively connecting the processing elements in a sequence for communicating the data objects between successive processing elements in an order defined by the sequence;
at least one of the processing elements being operable to generate user interface output objects representative of respective data objects communicated via the sequence of processing elements;
a user interface controller responsive to the user interface output objects to generate presentation data for output to a user interface for presenting information representative of the data objects;
and wherein one of the processing elements in the sequence comprises a help object generator operable to generate a help object comprising a further user interface output object representative of help information whereby the user interface controller is responsive to the help object to generate presentation data containing said help information for assisting a user in controlling the processing elements.

46. Apparatus as claimed in claim 45 wherein the help object generator is selectively operable to generate the help object representative of help information in respect of the previous processing element in the sequence.

47. Apparatus as claimed in claim 45 wherein the help object generator is selectively operable to generate a help object representative of help information in respect of all of the processing elements available to the user.

48. Apparatus as claimed in claim 47 wherein the user interface comprises a graphical user interface and wherein the user interface controller is operable to generate presentation data to represent help objects in respect of each of the preceding processing elements as respective icons, the user interface controller being responsive to user selection of a selected icon by generating presentation data containing help information for the processing element corresponding to the selected icon.

49. Apparatus as claimed in any of claims 45 to 48 wherein the help object generator comprises a parser for extracting information representative of attributes of data objects communicated via the processing element and wherein the help object generator is selectively operable to generate the help object to comprise help information relating to the attributes of the data objects.

50. Apparatus as claimed in claim 49 wherein the help object generator is operable to generate a help object for graphically representing the data flow through each preceding element in the sequence.

51. Apparatus as claimed in any of claims 45 to 50 wherein the help object generator comprises adaptive processing means operable to determine the identity of the processing elements in the sequence and to access a knowledge base to determine, based on the identity of the processing elements, appropriate help information to include in the help object.

52. Apparatus as claimed in any of claims 45 to 51 comprising a system controller operable to select said processing elements from a library of processing elements and to load selected processing elements into the operating environment in said sequence determined by the user.

53. Apparatus as claimed in claim 52 wherein the system comprises a memory and the controller is operable to store in said memory the set of processing elements as a customised application for subsequent reuse.

54. Apparatus as claimed in any of claims 52 and 53 comprising output means for outputting code defining an application defined by the set of processing elements for input in use to an external apparatus having a further operating environment within which the application is operable.

55. Apparatus as claimed in any of claims 45 to 54 in combination with a user interface defining a data display area for displaying representations of the data objects, a selector window for displaying a library of processing elements for user selection, and a processing element display window containing a representation of the selected processing elements.

56. A method of data processing apparatus for processing data objects comprising:
loading a set of processing elements operable to perform respective processing tasks into an operating environment receiving the processing elements in co-operable relationship;
using a first channel defined by the operating environment and operatively connecting the processing elements in a sequence to communicate the data objects between successive processing elements in an order defined by the sequence;
at least one of the processing elements generating user interface output objects representative of respective data objects communicated via the sequence of processing elements;
operating a user interface controller responsive to the user interface output objects to generate presentation data output to a user interface for presenting information representative of the data objects;
and wherein one of the processing elements in the sequence comprises a help object generator generating a help object comprising a further user interface output object representative of help information whereby the user interface controller is responsive to the help object to generate presentation data containing said help information for assisting a user in controlling the processing elements.

57. A method as claimed in claim 56 wherein the help object generator selectively generates the help object representative of help information in respect of the previous processing element in the sequence.

58. A method as claimed in claim 56 wherein the help object generator selectively generates a help object representative of help information in respect of all of the processing elements available to the user.

59. A method as claimed in claim 58 wherein the user interface comprises a graphical user interface and wherein the user interface controller is operable to generate presentation data to represent help objects in respect of each of the preceding processing elements as respective icons, the user interface controller being responsive to user selection of a selected icon by generating presentation data containing help information for the processing element corresponding to the selected icon.

60. A method as claimed in any of claims 56 to 59 wherein the help object generator comprises a parser extracting information representative of attributes of data objects communicated via the processing element and wherein the help object generator selectively generates the help object to comprise help information relating to the attributes of the data objects.

61. A method as claimed in claim 60 wherein the help object generator generates a help object graphically representing the data flow through each preceding element in the sequence.

62. A method as claimed in any of claims 56 to 61 wherein the help object generator comprises adaptive processing means determining the identity of the processing elements in the sequence and accesses a knowledge base to determine, based on the identity of the processing elements, appropriate help information to include in the help object.

63. A method as claimed in any of claims 56 to 62 comprising a system controller selecting said processing elements from a library of processing elements and loading selected processing elements into the operating environment in said sequence determined by the user.

64. A method as claimed in claim 63 wherein the system comprises a memory and the controller stores in said memory the set of processing elements as a customised application for subsequent reuse.

65. A method as claimed in any of claims 63 and 64 comprising outputting code defining an application defined by the set of processing elements and inputting the code to an external apparatus having a further operating environment within which the application is operable.

66. A method as claimed in any of claims 56 to 65 wherein a user interface defines a data display area displaying representations of the data objects, a selector window for displaying a library of processing elements for user selection, and a processing element display window containing a representation of the selected processing elements.

67. Data processing apparatus for processing data objects and comprising:
a set of processing elements operable to perform respective processing tasks;
an operating environment receiving the processing elements in co-operable relationship;
a first channel defined by the operating environment and operatively connecting the processing elements in a sequence for communicating the data objects between successive processing elements in an order defined by the sequence;
and a control channel defined by the operating environment for communicating control objects for controlling the operation of one or more of the processing elements, the control channel being operable to communicate the control objects between at least some of the processing elements in a reverse order which is the reverse of the order defined by the sequence.

68. Apparatus as claimed in claim 67 wherein at least one of the processing elements comprises a memory for storing at least one data object.

69. Apparatus as claimed in claim 68 wherein the processing element comprises a first sub element having means for connection to the first channel carrying data objects and a second sub element having means for connection to the control channel carrying control objects;
wherein the memory is accessible to both the first and second sub elements to constitute a shared state.

70. Apparatus as claimed in claim 69 comprising a second channel defined by the operating environment for communicating a user interface control object between successive processing elements in the sequence; and
a user interface controller responsive to the user interface control object when output from the last processing element in the sequence to generate control data for controlling a user interface in use to present information to the user for controlling the processing elements.

71. Apparatus as claimed in claim 70 wherein the user interface controller is responsive to inputs from the user interface in use to communicate user commands to the last processing element in the sequence.

72. Apparatus as claimed in claim 71 wherein the last processing element in the sequence is operable to generate the control objects, the second sub filter thereof being responsive to the inputs from the user interface to identify a data element of the data object stored in the last processing element and which is the subject of an editing command.

73. Apparatus as claimed in claim 72 wherein at least one of the processing elements is a data manipulating processing element responsive to the editing command to perform a manipulation task of editing a corresponding data object stored in the data manipulating processing element.

74. Apparatus as claimed in any of claims 70 to 73 wherein a first processing element in the sequence comprises a first sub element operable to import data objects from a file system and a second sub element operable to export an edited data object to be stored in the file system.

75. Apparatus as claimed in claim 74 wherein the second sub element is selectively operable to export the edited data object in response to a data saving command contained in a control object.

76. Apparatus as claimed in any of claims 67 to 75 wherein at least one of the processing elements is operable to perform an undo function and comprises means for generating a counter edit command to be communicated to a preceding processing element in the sequence so as to undo the effect on a data object of a previously processed edit command.

77. Apparatus as claimed in any of claims 67 to 76 wherein the sequence of processing elements constitutes a word processing application and wherein one of the processing elements is operable to perform a spell checking task upon data objects comprising text.

78. Apparatus as claimed in any of claims 67 to 77 comprising a system controller operable to select said processing elements from a library of processing elements and to load selected processing elements into the operating environment in said sequence determined by the user.

79. Apparatus as claimed in claim 78 wherein the system comprises a memory and the system controller is operable to store in said memory the set of processing elements as a customised application for subsequent reuse.

80. Apparatus as claimed in any of claims 78 and 79 comprising output means for outputting code defining an application defined by the set of processing elements for input in use to an external apparatus having a further operating environment within which the application is operable.

81. Apparatus as claimed in any of claims 67 to 80 in combination with a user interface defining a data display area for displaying representations of the data objects, a selector window for displaying a library of processing elements for user selection, and a processing element display window containing a representation of the selected processing elements.

82. A data processing method for processing data objects and comprising:
loading a set of processing elements operable to perform respective processing tasks into an operating environment receiving the processing elements in co-operable relationship;
using a first channel defined by the operating environment and operatively connecting the processing elements in a sequence to communicate the data objects between successive processing elements in an order defined by the sequence;
and using a control channel defined by the operating environment to communicate control objects for controlling the operation of one or more of the processing elements, the control channel communicating the control objects between at least some of the processing elements in a reverse order which is the reverse of the order defined by the sequence.

83. A method as claimed in claim 82 wherein at least one of the processing elements comprises a memory for storing at least one data object.

84. A method as claimed in claim 83 wherein the processing element comprises a first sub element connected to the first channel carrying data objects and a second sub element connected to the control channel carrying control objects;
wherein the memory is accessible to both the first and second sub elements to constitute a shared state.

85. A method as claimed in claim 84 comprising a second channel defined by the operating environment communicating a user interface control object between successive processing elements in the sequence; and
a user interface controller responding to the user interface control object output from the last processing element in the sequence to generate control data controlling a user interface to present information to the user for controlling the processing elements.

86. A method as claimed in claim 85 wherein the user interface controller is responsive to inputs from the user interface to communicate user commands to the last processing element in the sequence.

87. A method as claimed in claim 86 wherein the- last processing element in the sequence generates the control objects, the second sub element thereof being responsive to the inputs from the user interface to identify a data element of the data object stored in the last processing element and which is the subject of an editing command.

88. A method as claimed in claim 87 wherein at least one of the processing elements is a data manipulating processing element responsive to the editing command to perform a manipulation task of editing a corresponding data object stored in the data manipulating processing element.

89. A method as claimed in any of claims 85 to 88 wherein a first processing element in the sequence comprises a first sub element importing data objects from a file system and a second sub element exports an edited data object to be stored in the file system.

90. A method as claimed in claim 89 wherein the second sub element selectively exports the edited data object in response to receiving a data saving command contained in a control object.

91. A method as claimed in any of claims 82 to 90 wherein at least one of the processing elements performs an undo function and generates a counter edit command communicated to a preceding processing element in the sequence so as to undo the effect on a data object of a previously processed edit command.

92. A method as claimed in any of claims 82 to 91 wherein the sequence of processing elements constitutes a word processing application and wherein one of the processing elements performs a spell checking task upon data objects comprising text.

93. A method as claimed in any of claims 82 to 92 comprising a system controller selecting said processing elements from a library of processing elements and loading the selected processing elements into the operating environment in said sequence determined by the user.

94. A method as claimed in claim 93 wherein the system comprises a memory and the system controller stores in said memory the set of processing elements as a customised application for subsequent reuse.

95. A method as claimed in any of claims 93 and 94 comprising outputting code defining an application defined by the set of processing elements and inputting the code to an external apparatus having a further operating environment within which the application is operable.

96. A method as claimed in any of claims 82 to 95 wherein a user interface defines a data display area displaying representations of the data objects, a selector window for displaying a library of processing elements for user selection, and a processing element display window containing a representation of the selected processing elements.

97. A storage medium storing processor implementable instructions for controlling a processor to carry out the method of any one of claims 23 to 44, 56 to 66 and 82 to 96.

98. An electrical signal carrying processor implementable instructions for controlling a processor to carry out the method of any one of claims 23 to 44, 56 to 66 and 82 to 96.

99. A computer program comprising processor implementable instructions for carrying out a method as claimed in any one of claims 23 to 44, 56 to 66 and 82 to 96.

100. An application comprising processor implementable instructions obtained by carrying out a method as claimed in any of claims 23 to 44, 56 to 66 and 82 to 96.

101. A storage medium storing processor implementable instructions for an application obtained by carrying out a method as claimed in any of claims 23 to 44, 56 to 66 and 82 to 96.

102. An electrical signal carrying processor implementable instructions for an application obtained by carrying out a method as claimed in any of claims 23 to 44, 56 to 66 and 82 to 96.

103. A logic circuit embodying an algorithm for carrying out a method as claimed in any one of claims 23 to 44; 56 to 66 and 82 to 96.
